# EUROPEAN PATENT APPLICATION

(11) **EP 4 841 931 A1**
(43) Date of publication of application: **18.11.2026**
(21) Application number: 26177521.7
(22) Date of filing: 08.05.2026
(51) Int. Cl.: H04L 9/08, H04B 10/70

(54) **QUANTUM POSITION VERIFICATION PROVER DEVICE WITH A NON-POLARIZING BEAM SPLITTER AND AT LEAST ONE PROJECTION-VALUED MEASUREMENT SYSTEM**

(30) Priority: 12.05.2025 US 202519204930
(71) Applicant: The Boeing Company, Arlington, VA 22202 (US)
(72) Inventor: MOHAGEG, Makan, Arlington, 22202 (US)
(74) Representative: Bugnion S.p.A. - US1

(57) **Abstract**

A device includes a non-polarizing beam splitter (NPBS) positioned to receive a quantum encoded photon. The device further includes a fixed quantum-basis rotator component positioned to receive the quantum encoded photon from a first output portion of the NPBS. The device additionally includes a projection-valued measurement (PVM) system positioned to detect the quantum encoded photon when the quantum encoded photon propagates from one of a second output portion of the NPBS or an output portion of the fixed quantum-basis rotator component.

## Description

### FIELD

The present disclosure relates generally to a quantum position verification (QPV) prover device and to a QPV prover device with a non-polarizing beam splitter (NPBS) and at least one projection-valued measurement (PVM) system.

### BACKGROUND

QPV is a cryptographic protocol that uses quantum mechanics to verify a physical location of a QPV prover device.

### SUMMARY

An embodiment of the present disclosure provides a QPV prover device, comprising: an NPBS positioned to receive a quantum encoded photon from a first QPV verification device; a first PVM system positioned to detect the quantum encoded photon when the quantum encoded photon exits from a first output portion of the NPBS; a fixed quantum-basis rotator component positioned to receive the quantum encoded photon when the quantum encoded photon exits from a second output portion of the NPBS; and a second PVM system positioned to detect the quantum encoded photon when the quantum encoded photon exits from an output portion of the fixed quantum-basis rotator component.

In one example, each PVM system of the first PVM system and the second PVM system includes:
a spatial mode discriminator component positioned to receive the quantum encoded photon when the quantum encoded photon enters the PVM system;
a first optical detector positioned to receive the quantum encoded photon when the quantum encoded photon exits from a first output portion of the spatial mode discriminator component; and
a second optical detector positioned to receive the quantum encoded photon when the quantum encoded photon exits from a second output portion of the spatial mode discriminator component.

In one example, the fixed quantum-basis rotator component includes a spatial mode conversion component.

In one example, each PVM system of the first PVM system and the second PVM system includes:
an orbital angular momentum (OAM) mode discriminator component positioned to receive the quantum encoded photon when the quantum encoded photon enters the PVM system;
a first optical detector positioned to receive the quantum encoded photon when the quantum encoded photon exits from a first output portion of the OAM mode discriminator component; and
a second optical detector positioned to receive the quantum encoded photon when the quantum encoded photon exits from a second output portion of the OAM mode discriminator component.

In one example, the fixed quantum-basis rotator component includes an OAM mode conversion component.

In one example, each PVM system of the first PVM system and the second PVM system includes:
an optical detector positioned to receive the quantum encoded photon when the quantum encoded photon enters the PVM system.

In one example, the fixed quantum-basis rotator component includes a time-bin conversion component.

In one example, the fixed quantum-basis rotator component includes a phase conversion component.

In one example, each PVM system of the first PVM system and the second PVM system includes:
a dispersive component positioned to receive the quantum encoded photon when the quantum encoded photon enters the PVM system;
a first optical detector positioned to receive the quantum encoded photon when the quantum encoded photon exits from a first output portion of the dispersive component; and
a second optical detector positioned to receive the quantum encoded photon when the quantum encoded photon exits from a second output portion of the dispersive component. In one example, the fixed quantum-basis rotator component includes an optical mode conversion component.

In one example, the QPV prover device further comprises a processing component configured to:
obtain measurement setting information from a second QPV verification device;
obtain, after obtaining the measurement setting information, detector information from the first PVM system or the second PVM system based on a particular PVM system, of the first PVM system and the second PVM system, receiving the quantum encoded photon;
determine, based on the measurement setting information and the detector information, measurement information; and
transmit the measurement information to the first QPV verification device.

Another embodiment of the present disclosure provides a device, comprising: an NPBS positioned to receive a quantum encoded photon; a fixed quantum-basis rotator component positioned to receive the quantum encoded photon from a first output portion of the NPBS; and a PVM system positioned to detect the quantum encoded photon when the quantum encoded photon propagates from one of a second output portion of the NPBS or an output portion of the fixed quantum-basis rotator component. In one example, the device further comprises a set of reflectors or a waveguide, wherein:
the set of reflectors or the waveguide are positioned to receive the quantum encoded photon from the fixed quantum-basis rotator component; and
the PVM system is further positioned to receive the quantum encoded photon from the set of reflectors or the waveguide.

In one example, the device further comprises a first polarizing beam splitter (PBS), a second PBS, and a set of reflectors or a waveguide, wherein:
the first PBS is positioned to receive the quantum encoded photon from the fixed quantum-basis rotator component;
the set of reflectors or the waveguide are positioned to receive the quantum encoded photon from a first output portion of the first PBS;
the second PBS is positioned to receive the quantum encoded photon from the set of reflectors or the waveguide; and
the PVM system is further positioned to receive the quantum encoded photon from the second PBS.

In one example, the fixed quantum-basis rotator component includes at least one of: a spatial mode conversion component, an OAM mode conversion component, a time-bin conversion component, a phase conversion component, or an optical mode conversion component.

In one example, the device further comprises a processing component configured to:
obtain measurement setting information;
obtain, after obtaining the measurement setting information, detector information from the PVM system based on the PVM system detecting the quantum encoded photon;
determine, based on the measurement setting information and the detector information, measurement information; and
transmit the measurement information.

In one example, the measurement setting information identifies whether a particular optical detector of the PVM system is expected to receive the quantum encoded photon.

In one example, the measurement setting information identifies whether the PVM system is expected to receive the quantum encoded photon within a first time window or either one of a second time window that follows the first time window or a third time window that follows the second time window.

Yet a further embodiment of the present disclosure provides a method, comprising: obtaining, by a processing component of a QPV device, measurement setting information; obtaining, after obtaining the measurement setting information, detector information from a PVM system and based on the PVM system detecting a quantum encoded photon that is received by a NPBS of the QPV device and propagated to the PVM system via the NPBS or the NPBS and a fixed quantum-basis rotator component of the QPV device; determining, based on the measurement setting information and the detector information, measurement information; and transmitting the measurement information.

In one example, the measurement information indicates whether the PVM system received the quantum encoded photon within a time window indicated by the measurement setting information.

In one example, the measurement setting information identifies whether a particular optical detector of the PVM system is expected to receive the quantum encoded photon.

The features, functions, and advantages described herein can be achieved independently in various implementations or can be combined in other implementations, further details of which are shown in the drawings and described below.

### BRIEF DESCRIPTION OF THE DRAWINGS

Figs. 1A-1B are diagrams of an example implementation associated with a QPV prover device with an NPBS and at least one PVM system.
Figs. 2A-2C are diagrams of an example implementation associated with a QPV prover device with an NPBS and at least one PVM system.
Figs. 3A-3C are diagrams of an example implementation associated with a QPV prover device with an NPBS and at least one PVM system.
Fig. 4 is a diagram of an example implementation of a PVM system described herein.
Fig. 5 is a diagram of an example implementation of a PVM system described herein.
Fig. 6 is a diagram of an example implementation of a PVM system described herein.
Fig. 7 is a diagram of an example implementation of a PVM system described herein.
Fig. 8 is a diagram of example components of a device associated with a QPV prover device with an NPBS and at least one PVM system.
Fig. 9 is a flowchart of an example process associated with a QPV prover device with an NPBS and at least one PVM system.

### DETAILED DESCRIPTION

The following detailed description of example implementations refers to the accompanying drawings. The same reference numbers in different drawings identify the same or similar elements.

QPV is a protocol for verifying a device's physical location by transmitting quantum signals (e.g., quantum encoded photons) to the device. Since quantum information cannot be copied without detection, only a device physically located at a claimed location can correctly receive, process, and respond to the quantum signals within strict time constraints.

As an example, a quantum signal comprises a photon, which is a quantum particle of light having a quantum state characterized by one or more degrees of freedom. These degrees of freedom may include, but are not limited to, spatial mode, orbital angular momentum (OAM) mode, temporal mode (e.g., a time-bin encoding), phase, energy, wavelength, frequency, and polarization. Quantum information can be encoded into a photon by modifying at least one of these degrees of freedom, thereby generating a quantum encoded photon. The device being verified is configured to receive and process the quantum encoded photon, and return a reply signal. Adversaries located outside a specified location cannot both intercept and respond to the quantum signals within required time constraints, and cannot clone the quantum encoded photon without introducing detectable errors. This makes QPV an effective defense against location spoofing, preventing attackers from falsely claiming a legitimate device's position.

However, the effectiveness of QPV heavily depends on a speed at which the device can receive and process incoming quantum signals. The faster this operation, the more precise a locational verification. A significant challenge occurs when the device relies on mechanical components, such as a quantum-basis rotator (e.g., to "rotate" a characteristic of a quantum encoded photon to modify a quantum state of the quantum encoded photon) with physical switching mechanisms, to properly align and handle quantum-encoded photons. Since mechanical movements are orders of magnitude slower than quantum signal transmission, this delay significantly impacts the precision of the location verification.

As a result, a "zone of security," a physical region within which the device is proven to be located, can become large (e.g., on the order of kilometers). This reduced precision introduces a security risk, as a bad actor operating within this extended zone of security can spoof the device without being detected using QPV. Put another way, an inherent delay in mechanical processing undermines the security benefits of QPV, making it less effective in scenarios requiring high-precision location verification.

Some implementations described herein include a QPV prover device that utilizes a physical configuration of fixed components, which eliminates delays associated with mechanical movement of switching mechanisms. For example, the QPV prover device may include an NPBS positioned to receive a quantum encoded photon from a first QPV verification device, a fixed quantum-basis rotator component positioned to receive the quantum encoded photon when the quantum encoded photon exits (e.g., at an instant in time that the quantum encoded photon exits, or after the instant in time) from a first output portion of the NPBS, and at least one PVM system positioned to detect the quantum encoded photon when the quantum encoded photon exits from one of a second output portion of the NPBS or an output portion of the fixed quantum-basis rotator component. Because each component is fixed, physical switching mechanisms are not required, such as for the fixed quantum-basis rotator component to receive and detect the quantum encoded photon transmitted by the first QPV verification device. Accordingly, the QPV prover device can include a processing component to process (e.g., in real-time, or near real-time) detector information (that is generated by the at least one PVM system upon detection of the quantum encoded photon) to generate measurement information that the QPV prover device provides to the first QPV verification device to verify the physical location of the QPV prover device.

By removing a need for mechanical repositioning, the QPV prover device can process quantum information more rapidly, enabling the QPV prover device to prove the physical location of the QPV prover device with greater precision. For example, instead of waiting for physical components to adjust, the processing component of a QPV device only needs to handle incoming information, such as detector information and measurement setting information from a second QPV verification device, to generate the measurement information (e.g., in real-time, or near real-time).

By reducing an amount of time required to process quantum signals and generate measurement information, a locational accuracy of the QPV prover device is significantly improved. This, in turn, decreases a zone of security of the QPV prover device, reducing the zone from potentially large sizes (e.g., kilometers, as seen with mechanically constrained devices) to a much smaller range, on the order of meters. A smaller zone of security enhances overall network security by minimizing a risk that a bad actor device can operate undetected within a verified area, thereby strengthening a reliability of QPV-based location authentication.

Further, some implementations include at least one PVM system, which enables encoding, manipulation, and detection of quantum information associated with a quantum encoded photon. The PVM system may operate with respect to one or more degrees of freedom of the quantum encoded photon, such as spatial mode, OAM mode, temporal characteristic (e.g., time-bin), phase, energy, wavelength, frequency, and/or polarization. By leveraging these multiple degrees of freedom, the PVM system facilitates the encoding and extraction of increased and more diverse quantum information from a single photon, thereby enhancing the capacity and flexibility of the QPV prover device.

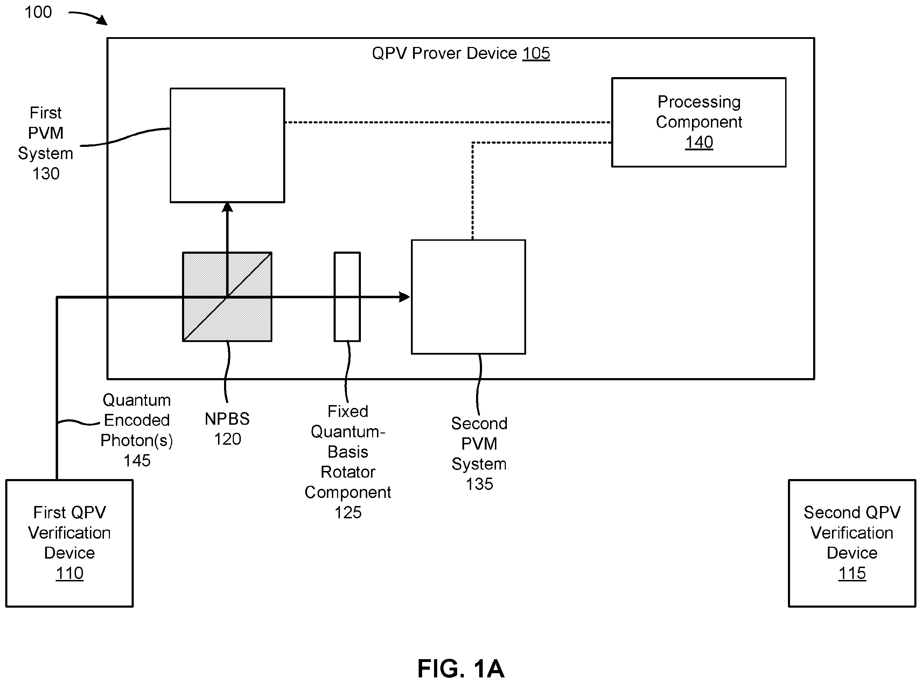

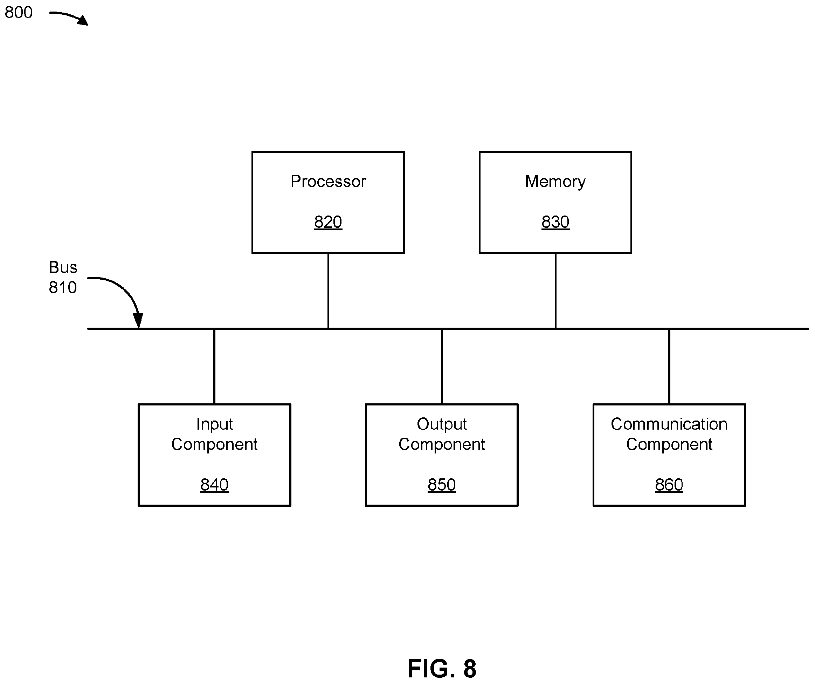

Figs. 1A-1B are diagrams of an example implementation 100 associated with a QPV prover device with an NPBS 120 and at least one PVM system 130. As shown in Figs. 1A-1B, example implementation 100 includes a QPV prover device 105, a first QPV verification device 110, and a second QPV verification device 115, components of which are described in more detail below in connection with Fig. 8. As further shown in Figs. 1A-1B, the QPV prover device 105 includes an NPBS 120, a fixed quantum-basis rotator component 125, a first PVM system 130, a second PVM system 135, and a processing component 140.

Each of the QPV prover device 105, the first QPV verification device 110, and the second QPV verification device 115 includes one or more devices capable of receiving, processing, storing, routing, and/or providing classical information (e.g., non-quantum information), such as in a manner described herein. For example, the QPV prover device 105, the first QPV verification device 110, and the second QPV verification device 115 may include a router, such as a label switching router (LSR), a label edge router (LER), an ingress router, an egress router, a provider router (e.g., a provider edge router or a provider core router), a virtual router, or another type of router. Additionally, or alternatively, each of the QPV prover device 105, the first QPV verification device 110, and the second QPV verification device 115 may include a gateway, a switch, a firewall, a hub, a bridge, a reverse proxy, a server (e.g., a proxy server, a cloud server, or a data center server), a load balancer, and/or a similar device.

The QPV prover device 105 and the first QPV verification device 110, and optionally the second QPV verification device 115, also include one or more devices capable of receiving, processing, storing, routing, and/or providing quantum information (e.g., non-classical information), such as in a manner described herein. For example, the first QPV verification device 110 may include a quantum source, such as single-photon source, one or more quantum state preparation components (e.g., for preparing specific characteristics of a photon, which results in a quantum encoded photon), and an optical transmission system (e.g., a fiber-optic optical transmission system or a free-space optical transmission system to direct the quantum encoded photon to the QPV prover device 105). As another example, the QPV prover device 105 may include an optical reception system (e.g., a fiber-optic optical reception system or a free-space optical reception system to receive a quantum encoded photon) and one or more other optical components to relay, detect, and measure the quantum encoded photon, as further described herein. The QPV prover device 105, the first QPV verification device 110, and the second QPV verification device 115 are spatially separated and thus may perform one or more operations described herein to enable the QPV prover device 105 to prove a physical location of the QPV prover device 105.

The NPBS 120 is positioned (e.g., within the QPV prover device 105) to receive a quantum encoded photon 145 from the first QPV verification device 110. For example, as shown in Figs. 1A-1B, the NPBS 120 may be positioned at an input region of the QPV prover device 105 to receive (e.g., directly receive) the quantum encoded photon 145 at a left input portion of the NPBS 120 from the first QPV verification device 110. The first QPV verification device 110 may transmit the quantum encoded photon 145 to the QPV prover device 105 to facilitate the QPV prover device 105 proving the physical location of the QPV prover device 105, as further described herein.

The NPBS 120 is configured to direct (e.g., transmit or reflect, along with other examples) light (e.g., comprising one or more photons) while maintaining a polarization, or one or more other quantum characteristics, of the light. Accordingly, the NPBS 120 may include at least one of an NPBS cube, an NPBS wire, an NPBS plate, an NPBS fiber, a directional coupler, a prism, a grating, or another type of optical component that is configured to direct light while maintaining a polarization of the light. The NPBS 120 may be configured to direct the quantum encoded photon 145 to exit from a particular output portion of the NPBS 120. For example, as shown in Figs. 1A-1B, the NPBS 120 may direct the quantum encoded photon 145 to exit from one of a first output portion (e.g., a top output portion) of the NPBS 120 or a second output portion (e.g., a right output portion) of the NPBS 120.

The first PVM system 130 is positioned (e.g., within the QPV prover device 105) to receive the quantum encoded photon 145 when the quantum encoded photon 145 exits (e.g., at an instant in time that the quantum encoded photon exits, or after the instant in time) from the first output portion of the NPBS 120. For example, as shown in Figs. 1A-1B, the first PVM system 130 is positioned to receive the quantum encoded photon 145 at a bottom input portion of the first PVM system 130 when the quantum encoded photon 145 exits from the top output portion of the NPBS 120.

The first PVM system 130 is positioned to detect the quantum encoded photon 145 after propagation of the quantum encoded photon 145 via the NPBS 120. For example, the first PVM system 130 may be positioned to detect the quantum encoded photon 145 when the quantum encoded photon 145 exits from the first output portion of the NPBS 120. As further described herein, the first PVM system 130 may include one or more optical detectors (e.g., one or more optical detectors 405), as well as one or more other components, wherein each optical detector is configured to detect light (e.g., comprising one or more photons), and, in some implementations, is configured to detect single photons. Accordingly, the first PVM system 130 may be configured to detect (e.g., by utilizing the one or more optical detectors) the quantum encoded photon 145 when the quantum encoded photon 145 impinges on the first PVM system 130.

The fixed quantum-basis rotator component 125 is positioned (e.g., within the QPV prover device 105) to receive the quantum encoded photon 145 when the quantum encoded photon 145 exits from the second output portion of the NPBS 120. For example, as shown in Figs.

1A-1B, the fixed quantum-basis rotator component 125 is positioned to receive the quantum encoded photon 145 at a left input portion of the fixed quantum-basis rotator component 125 when the quantum encoded photon 145 exits from the right output portion of the NPBS 120.

The fixed quantum-basis rotator component 125 is configured to convert (also referred to as "rotate") at least one quantum basis characteristic of light (e.g., comprising one or more photons) that transmits through the fixed quantum-basis rotator component 125. For example, the fixed quantum-basis rotator component 125 may be configured to rotate a spatial mode, an OAM mode, a temporal characteristic, a phase, an energy, a wavelength, a frequency, and/or a polarization of the quantum encoded photon 145 when the quantum encoded photon 145 propagates through the fixed quantum-basis rotator component 125, as further described herein. Accordingly, the fixed quantum-basis rotator component 125 may include at least one of a spatial mode conversion component, an OAM mode conversion component, a time-bin conversion component, a phase conversion component, or an optical mode conversion component, as further described herein. The fixed quantum-basis rotator component 125 then may direct the quantum encoded photon 145 to exit from an output portion (e.g., a right output portion) of the fixed quantum-basis rotator component 125.

The fixed quantum-basis rotator component 125 is "fixed" in that it is not designed to move, tilt, bend, or perform any other action that alters the position (e.g., the stationary position) of the fixed quantum-basis rotator component 125. As one example, the fixed quantum-basis rotator component 125 may not include, or may not be connected to, any type of component that would otherwise enable adjustment of the position of the fixed quantum-basis rotator component 125.

The second PVM system 135 is positioned (e.g., within the QPV prover device 105) to receive the quantum encoded photon 145 when the quantum encoded photon 145 exits from the output portion of the fixed quantum-basis rotator component 125. For example, as shown in Figs. 1A-1B, the second PVM system 135 is positioned to receive the quantum encoded photon 145 (e.g., at a left input portion of the second PVM system 135) when the quantum encoded photon 145 exits from the right output portion of the fixed quantum-basis rotator component 125.

The second PVM system 135 is positioned to detect the quantum encoded photon 145 after propagation of the quantum encoded photon 145 via the NPBS 120 and the fixed quantum-basis rotator component 125. For example, the second PVM system 135 may be positioned to detect the quantum encoded photon 145 when the quantum encoded photon 145 exits from the fixed quantum-basis rotator component 125. As further described herein, the second PVM system 135 may include one or more optical detectors (e.g., one or more optical detectors 405), as well as one or more other components, wherein each optical detector is configured to detect light (e.g., comprising one or more photons), and, in some implementations, is configured to detect single photons. Accordingly, the second PVM system 135 may be configured to detect (e.g., by utilizing the one or more optical detectors) the quantum encoded photon 145 (e.g., as rotated by the fixed quantum-basis rotator component 125) when the quantum encoded photon 145 impinges on the second PVM system 135.

As shown in Figs. 1A-1B, the processing component 140 is communicatively coupled to the first PVM system 130 and the second PVM system 135 and thus is configured to obtain information from the first PVM system 130 and the second PVM system 135. The processing component 140 is also configured to enable communication (e.g., via classical communication) between the QPV prover device 105 and each of the first QPV verification device 110 and the second QPV verification device 115.

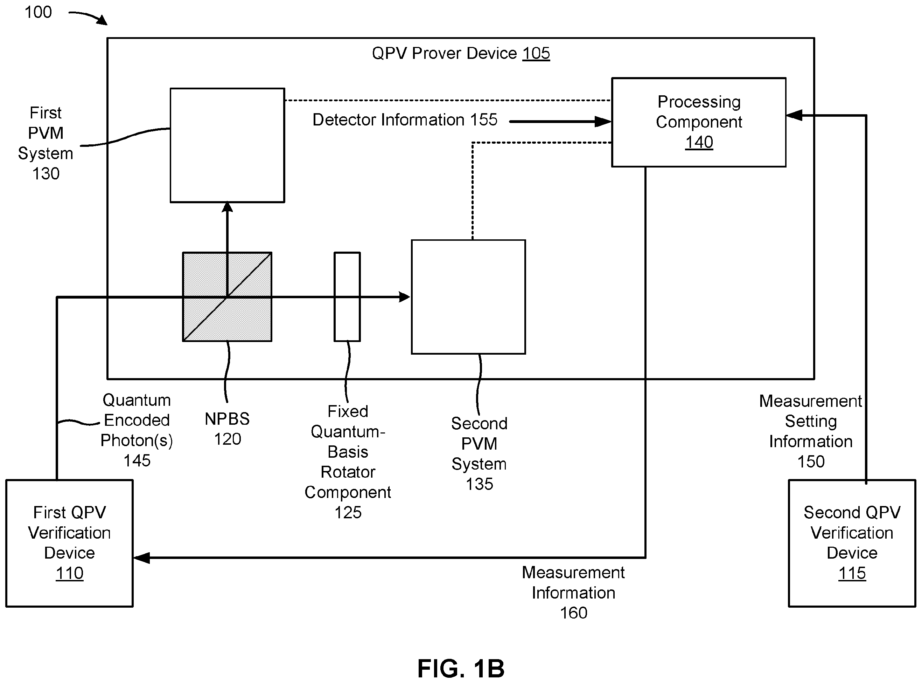

As shown in Fig. 1B, and by reference number 150, the QPV prover device 105 (e.g., using the processing component 140) obtains measurement setting information, such as from the second QPV verification device 115. The QPV prover device 105 may obtain the measurement setting information 150 from the second QPV verification device 115 via classical communication (e.g., non-quantum communication). For example, the second QPV verification device 115 may transmit the measurement setting information 150 to the QPV prover device 105, and the QPV prover device 105 may therefore receive the measurement setting information 150 from the second QPV verification device 115. In some implementations, the QPV prover device 105 may obtain the measurement setting information 150 before the quantum encoded photon 145 is received by the QPV prover device 105 (e.g., via the NPBS 120). Alternatively, the QPV prover device 105 may obtain the measurement setting information after the quantum encoded photon 145 is received by the QPV prover device 105.

The measurement setting information 150 may identify, for example, whether a particular optical PVM system (e.g., the first PVM system 130 or the second PVM system 135) is expected to receive the quantum encoded photon 145. Additionally, or alternatively, the measurement setting information 150 may identify whether a particular optical detector of a PVM system (e.g., the first PVM system 130 or the second PVM system 135) is expected to receive the quantum encoded photon 145.

As shown by reference number 155, the QPV prover device 105 (e.g., using the processing component 140) may obtain detector information. The QPV prover device 105 may obtain the detector information 155 from the first PVM system 130 or the second PVM system 135 (e.g., based on a particular PVM system, the first PVM system 130 or the second PVM system 135, receiving the quantum encoded photon 145). For example, when a particular PVM system detects the quantum encoded photon 145 (e.g., after propagation of the quantum encoded photon 145 to the particular PVM system via at least one of the NPBS 120 or the fixed quantum-basis rotator component 125), the particular PVM system may send the detector information 155 to the processing component 140. The QPV prover device 105 may obtain the detector information 155 prior to the QPV prover device 105 obtaining the measurement setting information 150, or after the QPV prover device 105 obtains the measurement setting information 150.

In some implementations, the detector information 155 indicates which PVM system, of the first PVM system 130 or the second PVM system 135, received (e.g., detected) the quantum encoded photon 145. For example, with respect to what is shown in Fig. 1B, the detector information 155 may indicate that the first PVM system 130 or the second PVM system 135 received the quantum encoded photon 145. Additionally, or alternatively, the detector information 155 may indicate which optical detector, of the PVM system, received (e.g., detected) the quantum encoded photon 145.

As shown by reference number 160, the QPV prover device 105 (e.g., using the processing component 140) may determine measurement information. The QPV prover device 105 may determine the measurement information 160 based on the measurement setting information 150 and the detector information 155. In some implementations, the QPV prover device 105 may determine, and therefore may cause the measurement information 160 to indicate, whether a PVM system (e.g., of the first PVM system 130 or the second PVM system 135) that is expected to receive the quantum encoded photon 145 (e.g., as indicated by the measurement setting information 150) successfully received the quantum encoded photon 145 (e.g., as indicated by the detector information 155). For example, the QPV prover device 105 may determine, and the measurement information 160 may therefore indicate, whether the first PVM system 130 or the second PVM system 135 successfully received the quantum encoded photon 145 (e.g., as expected). Additionally, or alternatively, the QPV prover device 105 may determine, and therefore may cause the measurement information 160 to indicate, whether a particular optical detector, of a PVM system, that is expected to receive the quantum encoded photon 145 (e.g., as indicated by the measurement setting information 150) successfully received the quantum encoded photon 145.

As further shown by reference number 160, the QPV prover device 105 (e.g., using the processing component 140) transmits the measurement information, such as to the first QPV verification device 110. The QPV prover device 105 may transmit the measurement information 160 to the first QPV verification device 110 via classical communication (e.g., non-quantum communication). In this way, the first QPV verification device 110 may receive the measurement information 160 from the QPV prover device 105.

While the description related to Figs. 1A-1B is directed to propagation of a single quantum encoded photon 145 from the first QPV verification device 110 to one of the first PVM system 130 or the second PVM system 135, the description is applicable to respective propagation of multiple quantum encoded photons 145 from the first QPV verification device 110 to one of the first PVM system 130 or the second PVM system 135 of the QPV prover device 105. Accordingly, in a similar manner as that described herein in relation to Figs. 1A-1B, the QPV prover device 105 may obtain measurement setting information 150 and detector information 155 that corresponds to each quantum encoded photon 145 and may determine and transmit measurement information 160 that corresponds to each quantum encoded photon 145. Accordingly, the first QPV verification device 110 may obtain information (e.g., the measurement information 160) to determine (e.g., accurately determine) a physical location of the QPV prover device 105.

As indicated above, Figs. 1A-1B are provided as an example. Other examples may differ from what is described with regard to Figs. 1A-1B.

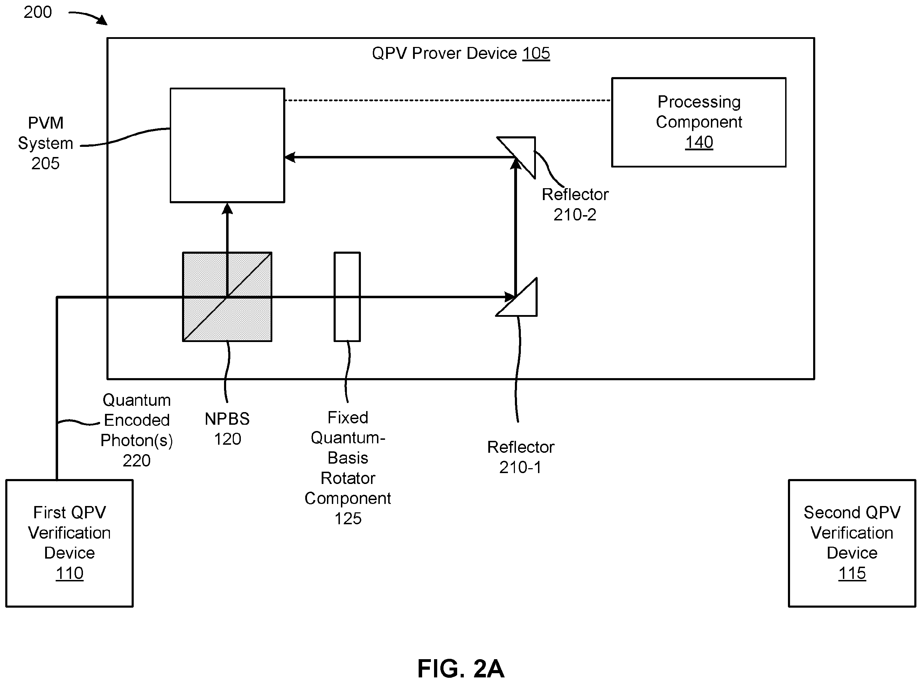

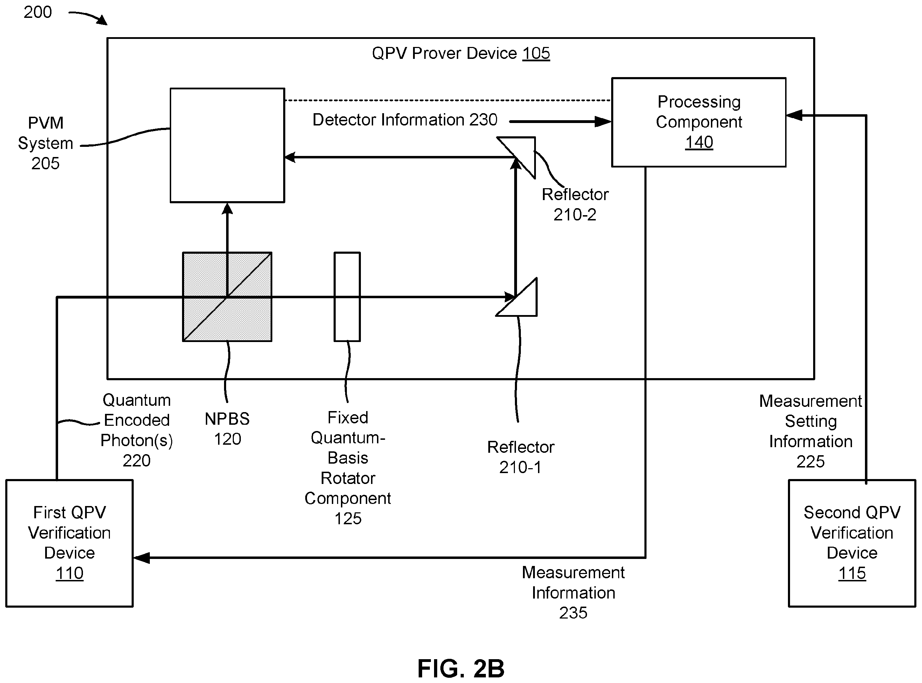

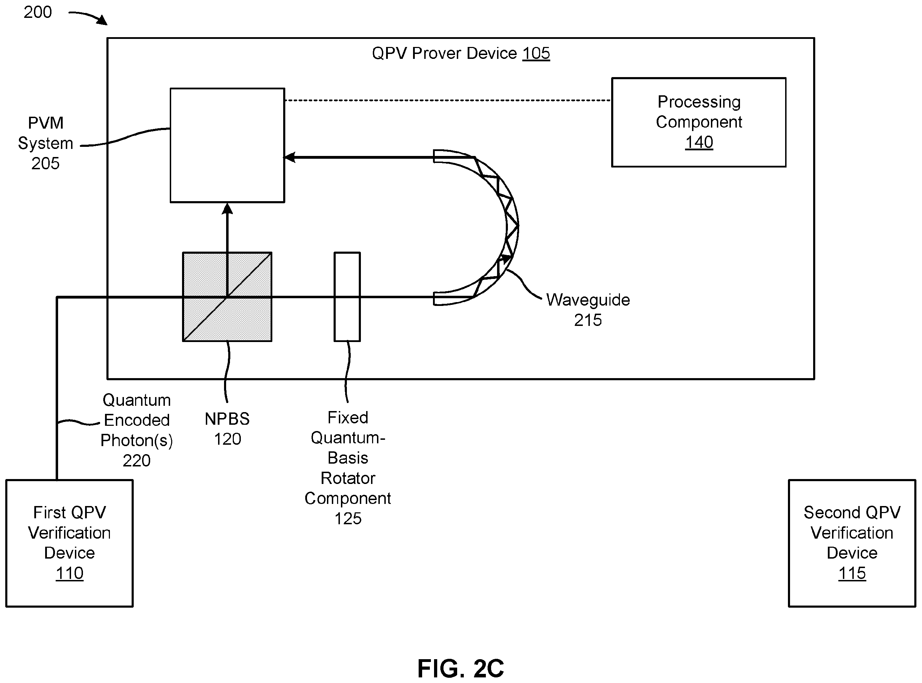

Figs. 2A-2C are diagrams of an example implementation 200 associated with a QPV prover device 105 with an NPBS 120 and at least one PVM system 205. As shown in Figs. 2A-2C, example implementation 200 includes the QPV prover device 105, the first QPV verification device 110, and the second QPV verification device 115. As further shown in Figs. 2A-2C, the QPV prover device 105 includes the NPBS 120, the fixed quantum-basis rotator component 125, a PVM system 205 (e.g., that is configured in a same or similar manner as the first PVM system 130 and/or the second PVM system 135), and the processing component 140, which are configured in a same or similar manner as that described herein in relation to Figs. 1A-1B. As shown in Figs. 2A and 2B, the QPV prover device 105 may further include a set of reflectors 210 (shown as reflectors 210-1 and 210-2), and therefore may not include another PVM system (e.g., may not include a second PVM system). Fig. 2C shows another configuration where the QPV prover device 105 includes a waveguide 215 (instead of the set of reflectors 210).

In a same or similar manner as that described herein in relation to Figs. 1A-1B, the NPBS 120 is positioned and configured to receive a quantum encoded photon 220 and to direct the quantum encoded photon 220 to exit from a particular output portion of the NPBS 120, such as from a first output portion (e.g., a top output portion) or a second output portion (e.g., a right output portion) of the NPBS 120; and the fixed quantum-basis rotator component 125 is positioned and configured to receive the quantum encoded photon 220 when the quantum encoded photon 220 exits (e.g., at an instant in time that the quantum encoded photon 220 exits, or after the instant in time) from the second output portion of the NPBS 120, to rotate at least one quantum basis characteristic of the quantum encoded photon 220, and to direct the quantum encoded photon 220 to exit from an output portion (e.g., a right output portion) of the fixed quantum-basis rotator component 125.

As shown in Figs. 2A-2B, the PVM system 205 is positioned to detect the quantum encoded photon 220 after propagation of the quantum encoded photon 220 via the NPBS 120. For example, the PVM system 205 may be positioned to detect the quantum encoded photon 220 when the quantum encoded photon 220 exits from the first output portion of the NPBS 120. As further described herein, the PVM system 205 may include one or more optical detectors (e.g., one or more optical detectors 405), as well as one or more other components, wherein each optical detector is configured to detect light (e.g., comprising one or more photons), and, in some implementations, is configured to detect single photons. Accordingly, the PVM system 205 may be configured to detect (e.g., by utilizing the one or more optical detectors 405) the quantum encoded photon 220 when the quantum encoded photon 220 impinges on the PVM system 205.

As further shown in Figs. 2A-2B, the set of reflectors 210 may be positioned (e.g., within the QPV prover device 105) to receive the quantum encoded photon 220 when the quantum encoded photon 220 exits from the output portion of the fixed quantum-basis rotator component 125 and to direct the quantum encoded photon 220 to the PVM system 205. For example, as shown in Figs. 2A-2B, the set of reflectors 210 may include a first reflector 210-1 and a second reflector 210-2. The first reflector 210-1 is positioned to receive the quantum encoded photon 220 at an input portion of first reflector 210-1 when the quantum encoded photon 220 exits from the output portion of the fixed quantum-basis rotator component 125 and to direct (e.g., via reflection) the quantum encoded photon 220 to exit from an output portion of the first reflector 210-1, such as to the second reflector 210-2. The second reflector 210-2 is positioned to receive the quantum encoded photon 220 at an input portion of the second reflector 210-2 when the quantum encoded photon 220 exits from output portion of the first reflector 210-1 and to direct (e.g., via reflection) the quantum encoded photon 220 to exit from an output portion of the second reflector 210-2, such as to the PVM system 205. Accordingly, each reflector 210 of the set of reflectors 210 may include a mirror or another type of optical component that is configured to reflect light (e.g., that comprises one or more photons).

Alternatively, as shown in Fig. 2C, the waveguide 215 may be positioned (e.g., within the QPV prover device 105) to receive the quantum encoded photon 220 when the quantum encoded photon 220 exits from the output portion of the fixed quantum-basis rotator component 125 and to direct the quantum encoded photon 220 to the PVM system 205. For example, as shown in Fig. 2C, the waveguide 215 is positioned to receive the quantum encoded photon 220 at an input portion of the waveguide 215 when the quantum encoded photon 220 exits from the output portion of the fixed quantum-basis rotator component 125 and to propagate and direct (e.g., via reflection within the waveguide) the quantum encoded photon 220 to exit from an output portion of the waveguide 215, such as to the PVM system 205. Accordingly, the waveguide 215 may include an optical fiber waveguide, a planar photonic waveguide, a superconducting waveguide, or another type of optical component that is configured to propagate and direct light (e.g., that comprises one or more photons). Accordingly, the PVM system 205 may be further positioned (e.g., within the QPV prover device 105) to receive (e.g., to detect) the quantum encoded photon 220 after propagation of the quantum encoded photon 220 via the fixed quantum-basis rotator component 125 and either the set of reflectors 210 or the waveguide 215. For example, the PVM system 205 may be positioned to detect the quantum encoded photon 220 when the quantum encoded photon 220 exits from the set of reflectors 210 or from the waveguide 215. For example, as shown in Figs. 2A-2C, the PVM system 205 may be further positioned to receive the quantum encoded photon 220 at a right input portion of the PVM system 205 when the quantum encoded photon 220 exits from the output portion of the second reflector 210-2 or from the output portion of the waveguide 215.

As described elsewhere herein, the PVM system 205 may include one or more optical detectors (e.g., one or more optical detectors 405), as well as one or more other components, wherein each optical detector is configured to detect light (e.g., comprising one or more photons), and, in some implementations, is configured to detect single photons. Accordingly, regardless of whether the PVM system 205 received the quantum encoded photon 220 via the bottom input portion of the PVM system 205 or the right input portion of the PVM system 205, the PVM system 205 is configured to detect (e.g., by utilizing the one or more optical detectors) the quantum encoded photon 220 when the quantum encoded photon 220 impinges on the PVM system 205.

As shown in Fig. 2B, and by reference number 225, the QPV prover device 105 (e.g., using the processing component 140) obtains measurement setting information, such as from the second QPV verification device 115 (e.g., in a similar manner as that described herein in relation to Fig. 1B and reference number 150).

The measurement setting information 225 may identify, for example, whether the PVM system 205, or a particular optical detector of the PVM system 205, is expected to receive the quantum encoded photon 220 within a first time window or a second time window that follows the first time window. The first time window may be associated with propagation of the quantum encoded photon 220 to the PVM system 205 via the NPBS 120 (e.g., directly, without propagation via the fixed quantum-basis rotator component 125, and one of the set of reflectors 210 or the waveguide 215). The second time window may be associated with propagation of the quantum encoded photon 220 to the PVM system 205 via the NPBS 120, the fixed quantum-basis rotator component 125, and one of the set of reflectors 210 or the waveguide 215. Put differently, the measurement setting information 225 may identify whether the PVM system 205, or a particular optical detector of the PVM system 205, is expected to receive the quantum encoded photon 220 within a first time window associated with a non-time-delayed path within the QPV prover device 105 or a second time window associated with a time-delayed path within the QPV prover device 105.

As shown by reference number 230, the QPV prover device 105 (e.g., using the processing component 140) may obtain detector information from the PVM system 205 (e.g., in a similar manner as that described herein in relation to Fig. 1B and reference number 155). The detector information 230 indicates whether the PVM system 205 received (e.g., detected) the quantum encoded photon 220 and a time of reception. Additionally, or alternatively, the detector information 230 may indicate which optical detector, of the PVM system 205, received (e.g., detected) the quantum encoded photon 220 and a time of reception.

As shown by reference number 235, the QPV prover device 105 (e.g., using the processing component 140) may determine measurement information (e.g., in a similar manner as that described herein in relation to Fig. 1B and reference number 160). The QPV prover device 105 may determine the measurement information 235 based on the measurement setting information 225 and the detector information 230. In some implementations, the QPV prover device 105 may determine, and therefore may cause the measurement information 235 to indicate, whether the PVM system 205 received the quantum encoded photon 220 (e.g., as indicated by the detector information 230) within a time window (e.g., that is indicated by the measurement setting information 225), such as the first time window or the second time window indicated by the measurement setting information 225. Additionally, or alternatively, the QPV prover device 105 may determine, and therefore may cause the measurement information 235 to indicate, whether an optical detector (e.g., a particular optical detector), of the PVM system 205, that is expected to receive the quantum encoded photon 220 (e.g., as indicated by the measurement setting information 225) successfully received the quantum encoded photon 220 (e.g., within a time window indicated by the measurement setting information 225).

As further shown by reference number 235, the QPV prover device 105 (e.g., using the processing component 140) transmits the measurement information, such as to the first QPV verification device 110 (e.g., in a similar manner as that described herein in relation to Fig. 1B and reference number 160).

While the description related to Figs. 2A-2C is directed to propagation of a single quantum encoded photon 220 from the first QPV verification device 110 to the PVM system 205 of the QPV prover device 105, the description is applicable to propagation of multiple quantum encoded photons 220 from the first QPV verification device 110 to the PVM system 205 of the QPV prover device 105. Accordingly, in a similar manner as that described herein in relation to Figs. 2A-2C, the QPV prover device 105 may obtain measurement setting information 225 and detector information 230 that corresponds to each quantum encoded photon 220, and may determine and transmit measurement information 235 that corresponds to each quantum encoded photon 220. Accordingly, the first QPV verification device 110 may obtain information (e.g., the measurement information 235) to determine (e.g., accurately determine) a physical location of the QPV prover device 105.

As indicated above, Figs. 2A-2C are provided as an example. Other examples may differ from what is described with regard to Figs. 2A-2C.

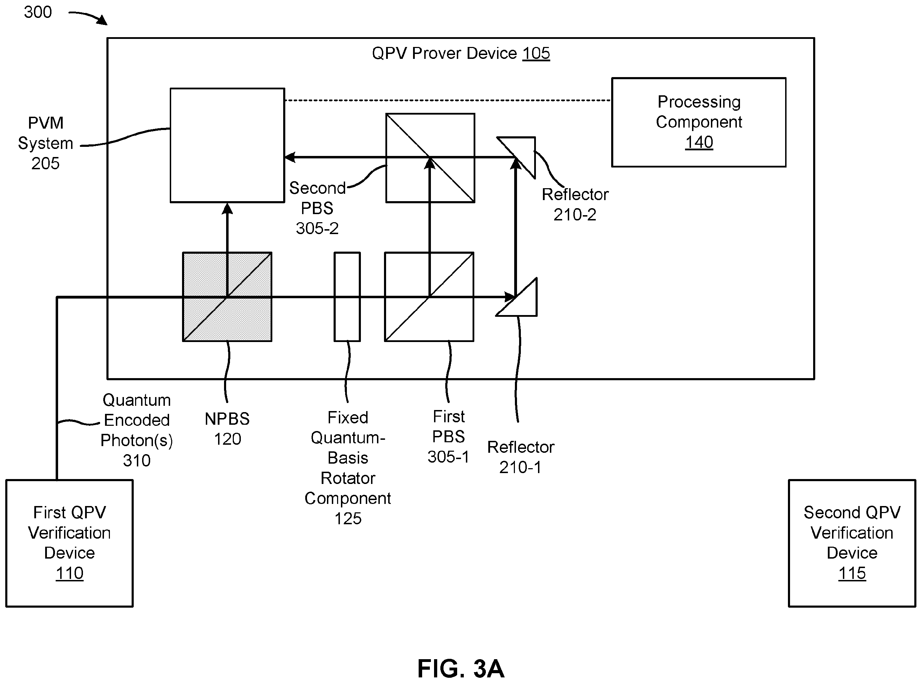

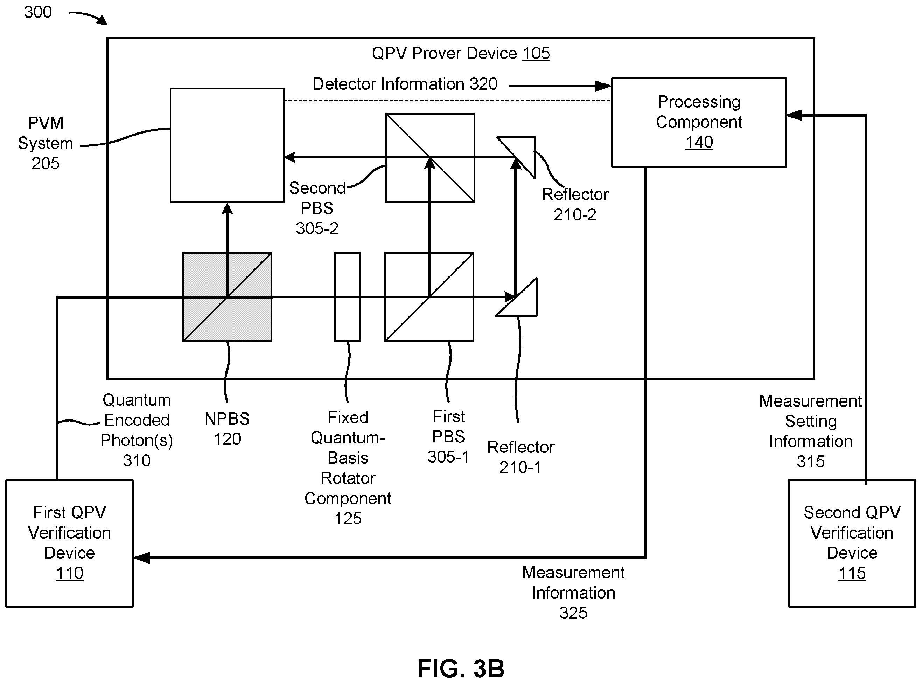

Figs. 3A-3C are diagrams of an example implementation 300 associated with a QPV prover device 105 with an NPBS 120 and at least one PVM system 205. As shown in Figs. 3A-3C, example implementation 300 includes the QPV prover device 105, the first QPV verification device 110, and the second QPV verification device 115. As further shown in Figs. 3A-3C, the QPV prover device 105 includes the NPBS 120, the fixed quantum-basis rotator component 125, the PVM system, and the processing component 140, and the set of reflectors 210 (shown as reflectors 210-1 and 210-2) or the waveguide 215, which are configured in a same or similar manner as that described herein in relation to Figs. 1A-1B and 2A-2C. As shown in Figs. 3A-3C, the QPV prover device 105 may further include a set of polarizing beam splitters (PBSs) (shown as a first PBS 305-1 and a second PBS 305-2). In a same or similar manner as that described herein in relation to Figs. 1A-1B, the NPBS 120 is positioned and configured to receive a quantum encoded photon 310 and to direct the quantum encoded photon 310 to exit from a particular output portion of the NPBS 120, such as from a first output portion (e.g., a top output portion) or a second output portion (e.g., a right output portion) of the NPBS 120; the fixed quantum-basis rotator component 125 is positioned and configured to receive the quantum encoded photon 310 when the quantum encoded photon 310 exits from the second output portion of the NPBS 120, to rotate at least one quantum basis characteristic of the quantum encoded photon 310, and to direct the quantum encoded photon 310 to exit from an output portion (e.g., a right output portion) of the fixed quantum-basis rotator component 125; and the PVM system 205 is positioned and configured to receive (e.g., to detect) the quantum encoded photon 310 when the quantum encoded photon 310 exits from the first output portion of the NPBS 120.

As shown in Figs. 3A-3C, the first PBS 305-1 is positioned (e.g., within the QPV prover device 105) to receive the quantum encoded photon 310 when the quantum encoded photon 310 exits (e.g., at an instant in time that the quantum encoded photon 310 exits, or after the instant in time) from the output portion of the fixed quantum-basis rotator component 125. For example, as shown in Figs. 3A-3C, the first PBS 305-1 is positioned to receive the quantum encoded photon 310 (e.g., at a left input portion of the first PBS 305-1) when the quantum encoded photon 310 exits from the right output portion of the fixed quantum-basis rotator component 125.

The first PBS 305-1 is configured to direct (e.g., transmit or reflect, along with other examples) light (e.g., comprising one or more photons) based on a polarization of the light. Accordingly, the first PBS 305-1 may include at least one of a PBS cube, a PBS wire, a PBS plate, a PBS fiber, a directional coupler, a prism, a grating, or another type of optical component that is configured to direct light based on the polarization of the light. The first PBS 305-1 may be configured to direct the quantum encoded photon 310 to exit from a particular output portion of the first PBS 305-1. For example, as shown in Figs. 3A-3C, the first PBS 305-1 may direct the quantum encoded photon 310 to exit from one of a first output portion (e.g., a right output portion) of the first PBS 305-1 or a second output portion (e.g., a top output portion) of the first PBS 305-1, such as based on whether the quantum encoded photon 310 (e.g., as rotated by the fixed quantum-basis rotator component 125) has a horizontal (H)-polarization or a vertical (V)-polarization.

As shown in Figs. 3A-3B, the set of reflectors 210 may be positioned (e.g., within the QPV prover device 105) to receive the quantum encoded photon 310 when the quantum encoded photon 310 exits from the first output portion of the first PBS 305-1, and to direct the quantum encoded photon 310 to the second PBS 305-2. For example, as shown in Figs. 3A-3B, the set of reflectors 210 may include a first reflector 210-1 and a second reflector 210-2. The first reflector 210-1 is positioned to receive the quantum encoded photon 310 at an input portion of the first reflector 210-1 when the quantum encoded photon 310 exits from the first output portion of the first PBS 305-1 and to direct (e.g., via reflection) the quantum encoded photon 310 to exit from an output portion of the first reflector 210-1, such as to the second reflector 210-2. The second reflector 210-2 is positioned to receive the quantum encoded photon 310 at an input portion of the second reflector 210-2 when the quantum encoded photon 310 exits from the output portion of the first reflector 320-1 and to direct (e.g., via reflection) the quantum encoded photon 310 to exit from an output portion of the second reflector 210-2, such as to the second PBS 305-2.

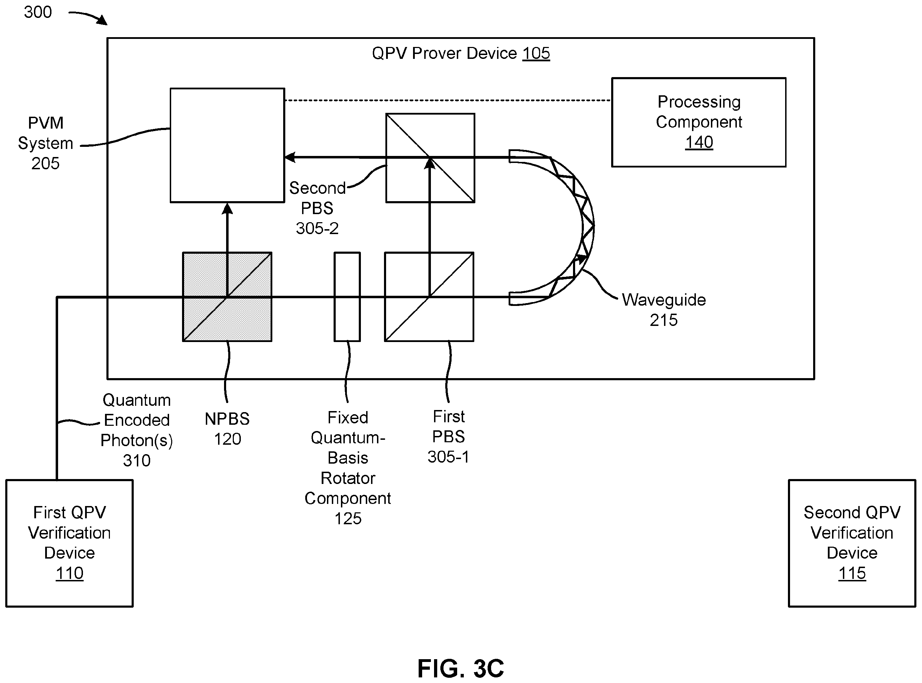

Alternatively, as shown in Fig. 3C, the waveguide 215 may be positioned (e.g., within the QPV prover device 105) to receive the quantum encoded photon 310 when the quantum encoded photon 310 exits from the first output portion of the first PBS 305-1 and to direct the quantum encoded photon 310 to the second PBS 305-2. For example, as shown in Figs. 3C, the waveguide 215 is positioned to receive the quantum encoded photon 310 at an input portion of the waveguide 215 when the quantum encoded photon 310 exits from the first PBS 305-1 and to propagate and direct (e.g., via reflection within the waveguide) the quantum encoded photon 310 to exit from an output portion of the waveguide 215, such as to the second PBS 305-2.

As shown in Figs. 3A-3C, the second PBS 305-2 is positioned (e.g., within the QPV prover device 105) to receive the quantum encoded photon 310 when the quantum encoded photon 310 exits from the first PBS 305-1, or from one of the set of reflectors 210 or the waveguide 215. For example, as shown in Figs. 3A-3C, the second PBS 305-2 is positioned to receive the quantum encoded photon 310 at a first input portion (e.g., a bottom input portion) of the second PBS 305-2 when the quantum encoded photon 310 exits from the second output portion (e.g., the top output portion) of the first PBS 305-1, or at a second input portion (e.g., a right input portion) of the second PBS 305-2 when the quantum encoded photon 310 exits from one of the output portion of the second reflector 210-2 or the output portion of the waveguide 215.

The second PBS 305-2 is configured to direct (e.g., transmit or reflect, along with other examples) light (e.g., comprising one or more photons) based on a polarization of the light, such as in a similar manner as that described herein in relation to the first PBS 305-1 described herein. The second PBS 305-2 may be configured to direct the quantum encoded photon 310 to exit from an output portion (e.g., a left output portion) of the second PBS 305-2. For example, as shown in Figs. 3A-3C, the second PBS 305-2 may reflect the quantum encoded photon 310 to exit from the output portion of the second other PBS 305-2 when the quantum encoded photon 310 exits from the second output portion (e.g., the top output portion) of the first PBS 305-1 (e.g., when the quantum encoded photon 310 has a first polarization of an H-polarization or a V-polarization), and may transmit the quantum encoded photon 310 to exit from the output portion of the second PBS 305-2 when the quantum encoded photon 310 exits from one of the output portion of the second reflector 210-2 or the output portion of the waveguide 215 (e.g., when the quantum encoded photon 310 has a second polarization of the H-polarization or the V-polarization). In this way, the second PBS 305-2 may direct the quantum encoded photon 310 to the PVM system 205.

Accordingly, the PVM system 205 may be further positioned (e.g., within the QPV prover device 105) to receive (e.g., to detect) the quantum encoded photon 310 after propagation of the quantum encoded photon 310 via the fixed quantum-basis rotator component 125, the first PBS 305-1, the second PBS 305-2, and/or either the set of reflectors 210 or the waveguide 215. For example, the PVM system 205 may be positioned to detect the quantum encoded photon 310 when the quantum encoded photon 310 exits from the second PBS 305-2. For example, as shown in Figs. 3A-3C, the PVM system 205 may be further positioned to receive the quantum encoded photon 310 at a right input portion of the PVM system 205 when the quantum encoded photon 310 exits from the left output portion of the second PBS 305-2.

As described elsewhere herein, the PVM system 205 may include one or more optical detectors (e.g., one or more optical detectors 405), as well as one or more other components, wherein each optical detector is configured to detect light (e.g., comprising one or more photons), and, in some implementations, is configured to detect single photons. Accordingly, regardless of whether the PVM system 205 received the quantum encoded photon 310 via the bottom input portion of the PVM system 205 or the right input portion of the PVM system 205, the PVM system 205 is configured to detect (e.g., by utilizing the one or more optical detectors) the quantum encoded photon 310 when the quantum encoded photon 310 impinges on the PVM system 205.

As shown in Fig. 2B, and by reference number 315, the QPV prover device 105 (e.g., using the processing component 140) obtains measurement setting information, such as from the second QPV verification device 115 (e.g., in a similar manner as that described herein in relation to Fig. 1B and reference number 150).

The measurement setting information 315 may identify, for example, whether the PVM system 205, or a particular optical detector of the PVM system 205, is expected to receive the quantum encoded photon 310 within a first time window or either one of a second time window that follows the first time window or a third time window that follows the second time window. The first time window may be associated with propagation of the quantum encoded photon 310 to the PVM system 205 via the NPBS 120 (e.g., directly, without propagation via the fixed quantum-basis rotator component 125). The second time window may be associated with propagation of the quantum encoded photon 310 to the PVM system 205 via the NPBS 120, the fixed quantum-basis rotator component 125, the first PBS 305-1, and the second PBS 305-2. The third time window may be associated with propagation of the quantum encoded photon 310 to the PVM system 205 via the NPBS 120, the fixed quantum-basis rotator component 125, the first PBS 305-1, one of the set of reflectors 210 or the waveguide 215, and the second PBS 305-2. Put differently, the measurement setting information 315 may identify whether the PVM system 205, or a particular optical detector of the PVM system 205, is expected to receive the quantum encoded photon 310 within a first time window associated with a non-time-delayed path within the QPV prover device 105 or either one of a second time window associated with a first time-delayed path within the QPV prover device 105 or a third time window associated with a second time-delayed path within the QPV prover device 105.

As shown by reference number 320, the QPV prover device 105 (e.g., using the processing component 140) may obtain detector information from the PVM system 205 (e.g., in a similar manner as that described herein in relation to Fig. 1B and reference number 155). The detector information 320 indicates whether the PVM system 205 received (e.g., detected) the quantum encoded photon 310 and a time of reception. Additionally, or alternatively, the detector information 320 may indicate which optical detector, of the PVM system 205, received (e.g., detected) the quantum encoded photon 310 and a time of reception.

As shown by reference number 325, the QPV prover device 105 (e.g., using the processing component 140) may determine measurement information (e.g., in a similar manner as that described herein in relation to Fig. 1B and reference number 160). The QPV prover device 105 may determine the measurement information 325 based on the measurement setting information 315 and the detector information 320. In some implementations, the QPV prover device 105 may determine, and therefore may cause the measurement information 325 to indicate, whether the PVM system 205 received the quantum encoded photon 310 (e.g., as indicated by the detector information 320) within a time window (e.g., that is indicated by the measurement setting information 315), such as the first time window or either the second time window or the third time window. Additionally, or alternatively, the QPV prover device 105 may determine, and therefore may cause the measurement information 325 to indicate, whether an optical detector (e.g., a particular optical detector), of the PVM system 205, that is expected to receive the quantum encoded photon 310 (e.g., as indicated by the measurement setting information 315) successfully received the quantum encoded photon 310 (e.g., within a time window indicated by the measurement setting information 315).

As further shown by reference number 325, the QPV prover device 105 (e.g., using the processing component 140) transmits the measurement information, such as to the first QPV verification device 110 (e.g., in a similar manner as that described herein in relation to Fig. 1B and reference number 160).

While the description related to Figs. 3A-3C is directed to propagation of a single quantum encoded photon 310 from the first QPV verification device 110 to the PVM system 205 of the QPV prover device 105, the description is applicable to propagation of multiple quantum encoded photons 310 from the first QPV verification device 110 to the PVM system 205 of the QPV prover device 105. Accordingly, in a similar manner as that described herein in relation to Figs. 3A-3C, the QPV prover device 105 may obtain measurement setting information 315 and detector information 320 that corresponds to each quantum encoded photon 310 and may determine and transmit measurement information 325 that corresponds to each quantum encoded photon 310. Accordingly, the first QPV verification device 110 may obtain information (e.g., the measurement information 325) to determine (e.g., accurately determine) a physical location of the QPV prover device 105.

As indicated above, Figs. 3A-3C are provided as an example. Other examples may differ from what is described with regard to Figs. 3A-3C.

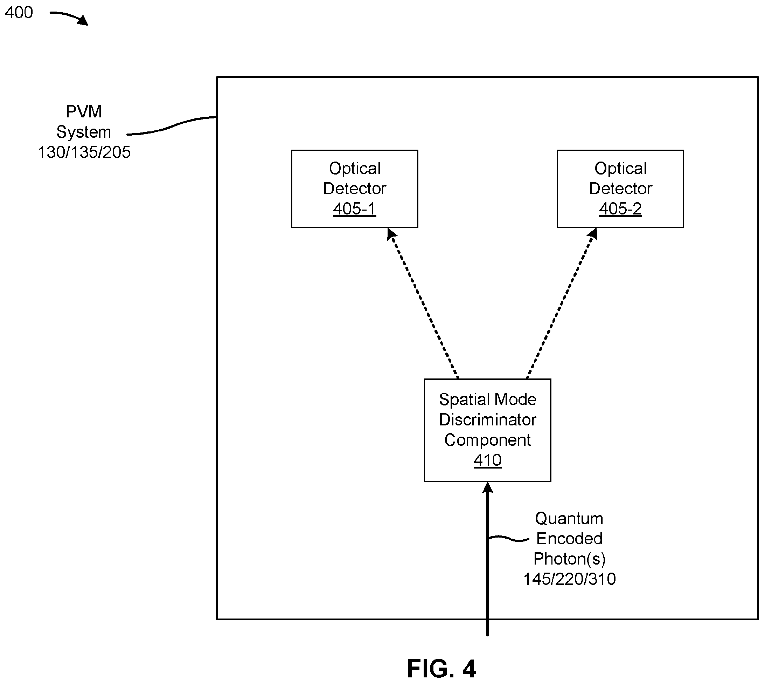

Fig. 4 is a diagram of an example implementation 400 of a PVM system described herein, such as of the first PVM system 130, the second PVM system 135, or the PVM system 205. As shown in Fig. 4, the PVM system includes a set of optical detectors 405 (e.g., one or more optical detectors 405), shown as a first optical detector 405-1 and a second optical detector 405-2, and a spatial mode discriminator component 410. Accordingly, the PVM shown in Fig. 4 may be included in a QPV prover device 105 when a quantum basis of a quantum encoded photon described herein, such as the quantum encoded photon 145, the quantum encoded photon 220, or the quantum encoded photon 310, is a spatial mode quantum basis. As further shown in Fig. 4, the spatial mode discriminator component 410 is positioned (e.g., within the PVM system) to receive the quantum encoded photon. For example, the spatial mode discriminator component 410 may be positioned to receive the quantum encoded photon when the quantum encoded photon enters (e.g., at an instant in time that the quantum encoded photon enters, or after the instant in time) the PVM system.

The spatial mode discriminator component 410 is configured to direct (e.g., transmit or reflect, along with other examples) light (e.g., comprising one or more photons) based on a spatial mode of the light. For example, the spatial mode discriminator component 410 may selectively alter a trajectory (e.g., a direction of propagation) of the encoded photon (e.g., the quantum encoded photon 145, the quantum encoded photon 220, or the quantum encoded photon 310) based on a spatial mode of the encoded photon. Accordingly, the spatial mode discriminator component 410 may include at least one of a transmissive volume Bragg grating (VBG), a spatial light modulator (SLM), a reflective VBG, a deformable mirror (DM), or another type of optical component that is configured to direct light based on a spatial mode of the light. The spatial mode discriminator component 410 may be configured to direct the quantum encoded photon to exit from a particular output portion of the spatial mode discriminator component 410. For example, as shown in Fig. 4, the spatial mode discriminator component 410 may direct the quantum encoded photon to exit from one of a first output portion (e.g., a top-left output portion) of the spatial mode discriminator component 410 or a second output portion (e.g., a top-right output portion) of the spatial mode discriminator component 410, such as based on whether the quantum encoded photon has a first spatial mode or a second spatial mode (e.g., that is different than the first spatial mode).

The set of optical detectors 405 are positioned to detect the quantum encoded photon after propagation of the quantum encoded photon from the spatial mode discriminator component 410. For example, as shown in Fig. 4, the first optical detector 405-1 is positioned to receive the quantum encoded photon when the quantum encoded photon exits from a first output portion (e.g., a top-left output portion) of the spatial mode discriminator component 410 and the second optical detector 405-2 is positioned to receive the quantum encoded photon when the quantum encoded photon exits from a second output portion (e.g., a top-right output portion) of the spatial mode discriminator component 410.

Each optical detector 405 is configured to detect light (e.g., comprising one or more photons), and, in some implementations, is configured to detect single photons. Accordingly, each optical detector 405 may include at least one of a single-photon avalanche diode (SPAD), a superconducting nanowire single-photon detector (SNSPD), a photomultiplier tube (PMT), a hybrid photomultiplier detector (HPD), or another type of optical component that is configured to detect a photon when the photon impinges on the optical component. For example, each optical detector 405 may be configured to detect the quantum encoded photon when the quantum encoded photon impinges on the optical detector 405. Each optical detector 405 may have a timing resolution in a nanosecond range or a picosecond range.

In some implementations, when a quantum basis of the quantum encoded photon is a spatial mode quantum basis, the fixed quantum-basis rotator component 125 is configured to rotate a spatial mode of light (e.g., comprising one or more photons) that transmits through the fixed quantum-basis rotator component 125. Accordingly, the fixed quantum-basis rotator component 125 may include a spatial mode conversion component, which may include at least one of a transmissive VBG, an SLM, a reflective VBG, a DM, or another type of optical component that is configured to rotate a spatial mode of the light. The fixed quantum-basis rotator component 125 may be configured to rotate a spatial mode of the quantum encoded photon (e.g., from a first spatial mode to a second spatial mode, along with other examples) when the quantum encoded photon propagates through the fixed quantum-basis rotator component 125. The fixed quantum-basis rotator component 125 then may direct the quantum encoded photon to exit from an output portion of the fixed quantum-basis rotator component 125, as described elsewhere herein.

As indicated above, Fig. 4 is provided as an example. Other examples may differ from what is described with regard to Fig. 4.

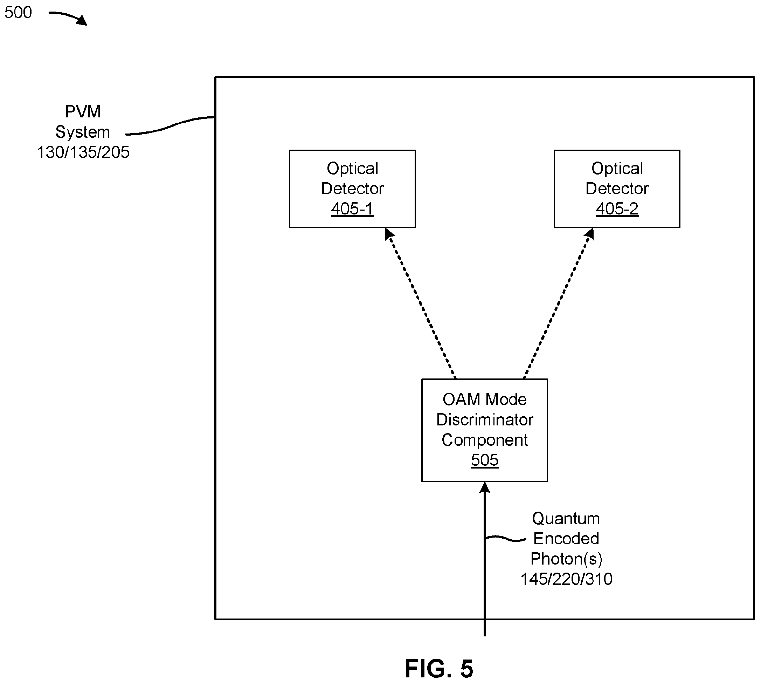

Fig. 5 is a diagram of an example implementation 500 of a PVM system described herein, such as of the first PVM system 130, the second PVM system 135, or the PVM system 205. As shown in Fig. 5, the PVM system includes a set of optical detectors 405 (e.g., one or more optical detectors 405), shown as a first optical detector 405-1 and a second optical detector 405-2, and an OAM mode discriminator component 505. Accordingly, the PVM system shown in Fig. 5 may be included in a QPV prover device 105 when a quantum basis of a quantum encoded photon described herein, such as the quantum encoded photon 145, the quantum encoded photon 220, or the quantum encoded photon 310, is an OAM mode quantum basis.

As further shown in Fig. 5, the OAM mode discriminator component 505 is positioned (e.g., within the PVM system) to receive the quantum encoded photon. For example, the OAM mode discriminator component 505 may be positioned to receive the quantum encoded photon when the quantum encoded photon enters (e.g., at an instant in time that the quantum encoded photon enters, or after the instant in time) the PVM system.

The OAM mode discriminator component 505 is configured to direct (e.g., transmit or reflect, along with other examples) light (e.g., comprising one or more photons) based on an OAM mode of the light. For example, the OAM mode discriminator component 505 may selectively alter a trajectory (e.g., a direction of propagation) of the encoded photon (e.g., the quantum encoded photon 145, the quantum encoded photon 220, or the quantum encoded photon 310) based on an OAM mode of the encoded photon. Accordingly, the OAM mode discriminator component 505 may include at least one of a transmissive VBG, an SLM, a reflective VBG, a DM, or another type of optical component that is configured to direct light based on an OAM mode of the light. The OAM mode discriminator component 505 may be configured to direct the quantum encoded photon to exit from a particular output portion of the OAM mode discriminator component 505. For example, as shown in Fig. 5, the OAM mode discriminator component 505 may direct the quantum encoded photon to exit from one of a first output portion (e.g., a top-left output portion) of the OAM mode discriminator component 505 or a second output portion (e.g., a top-right output portion) of the OAM mode discriminator component 505, such as based on whether the quantum encoded photon has a first OAM mode or a second OAM mode (e.g., that is different than the first OAM mode). The set of optical detectors 405 are positioned to detect the quantum encoded photon after propagation of the quantum encoded photon from the OAM mode discriminator component 505. For example, as shown in Fig. 5, the first optical detector 405-1 is positioned to receive the quantum encoded photon when the quantum encoded photon exits from a first output portion (e.g., a top-left output portion) of the OAM mode discriminator component 505 and the second optical detector 405-2 is positioned to receive the quantum encoded photon when the quantum encoded photon exits from a second output portion (e.g., a top-right output portion) of the OAM mode discriminator component 505.

As described elsewhere herein, each optical detector 405 is configured to detect light (e.g., comprising one or more photons), and, in some implementations, is configured to detect single photons. For example, each optical detector 405 may be configured to detect the quantum encoded photon when the quantum encoded photon impinges on the optical detector 405.

In some implementations, when a quantum basis of the quantum encoded photon is an OAM mode quantum basis, the fixed quantum-basis rotator component 125 is configured to rotate an OAM mode of light (e.g., comprising one or more photons) that transmits through the fixed quantum-basis rotator component 125. Accordingly, the fixed quantum-basis rotator component 125 may include an OAM mode conversion component, which may include at least one of a transmissive VBG, an SLM, a reflective VBG, a DM, or another type of optical component that is configured to rotate an OAM mode of the light. The fixed quantum-basis rotator component 125 may be configured to rotate an OAM mode of the quantum encoded photon (e.g., from a first OAM mode to a second OAM mode, along with other examples) when the quantum encoded photon propagates through the fixed quantum-basis rotator component 125. The fixed quantum-basis rotator component 125 then may direct the quantum encoded photon to exit from an output portion of the fixed quantum-basis rotator component 125, as described elsewhere herein.

As indicated above, Fig. 5 is provided as an example. Other examples may differ from what is described with regard to Fig. 5.

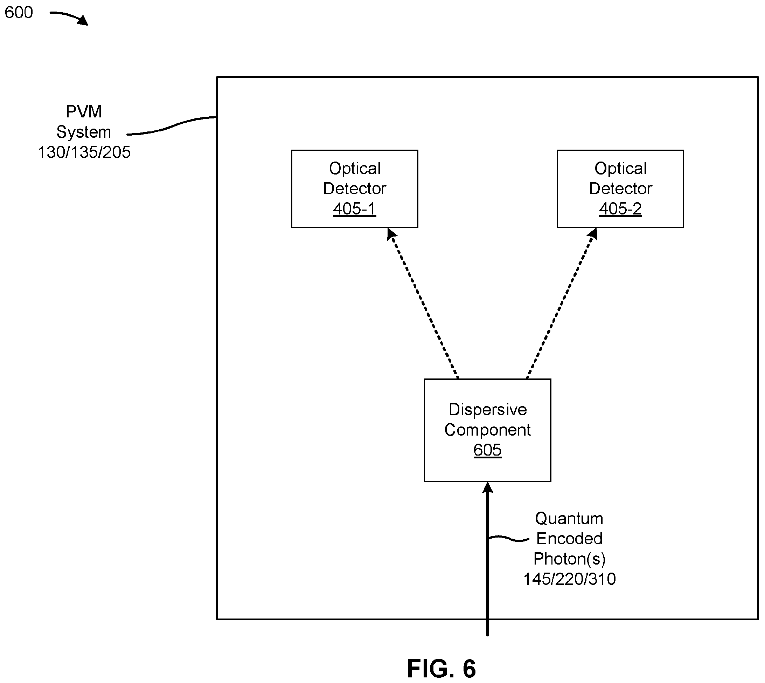

Fig. 6 is a diagram of an example implementation 600 of a PVM system described herein, such as of the first PVM system 130, the second PVM system 135, or the PVM system 205. As shown in Fig. 6, the PVM system includes a set of optical detectors 405 (e.g., one or more optical detectors 405), shown as a first optical detector 405-1 and a second optical detector 405-2, and a dispersive component 605. Accordingly, the PVM system shown in Fig. 6 may be included in a QPV prover device 105 when a quantum basis of a quantum encoded photon described herein, such as the quantum encoded photon 145, the quantum encoded photon 220, or the quantum encoded photon 310, is an optical mode quantum basis, such as an energy quantum basis, a wavelength quantum basis, or a frequency quantum basis.

As further shown in Fig. 6, the dispersive component 605 is positioned (e.g., within the PVM system) to receive the quantum encoded photon. For example, the dispersive component 605 may be positioned to receive the quantum encoded photon when the quantum encoded photon enters (e.g., at an instant in time that the quantum encoded photon enters, or after the instant in time) the PVM system.

The dispersive component 605 is configured to direct (e.g., transmit, diffract, or reflect, along with other examples) light (e.g., comprising one or more photons) based on an optical mode of the light. For example, the dispersive component 605 may selectively alter a trajectory (e.g., a direction of propagation) of the encoded photon (e.g., the quantum encoded photon 145, the quantum encoded photon 220, or the quantum encoded photon 310) based on an optical mode of the encoded photon. Accordingly, the dispersive component 605 may include at least one of a diffraction grating, a wavelength division multiplex, a dispersive optical fiber, a waveguide, or another type of optical component that is configured to direct light based on an optical mode of the light. The dispersive component 605 may be configured to direct the quantum encoded photon to exit from a particular output portion of the dispersive component 605. For example, as shown in Fig. 6, the dispersive component 605 may direct the quantum encoded photon to exit from one of a first output portion (e.g., a top-left output portion) of the dispersive component 605 or a second output portion (e.g., a top-right output portion) of the dispersive component 605, such as based on whether the quantum encoded photon has a first optical mode or a second optical mode (e.g., that is different than the first optical mode).

The set of optical detectors 405 are positioned to detect the quantum encoded photon after propagation of the quantum encoded photon from the dispersive component 605. For example, as shown in Fig. 6, the first optical detector 405-1 is positioned to receive the quantum encoded photon when the quantum encoded photon exits from a first output portion (e.g., a top-left output portion) of the dispersive component 605 and the second optical detector 405-2 is positioned to receive the quantum encoded photon when the quantum encoded photon exits from a second output portion (e.g., a top-right output portion) of the dispersive component 605.

As described elsewhere herein, each optical detector 405 is configured to detect light (e.g., comprising one or more photons), and, in some implementations, is configured to detect single photons. For example, each optical detector 405 may be configured to detect the quantum encoded photon when the quantum encoded photon impinges on the optical detector 405.

In some implementations, when a quantum basis of the quantum encoded photon is an optical mode quantum basis, the fixed quantum-basis rotator component 125 is configured to rotate an optical mode of light (e.g., comprising one or more photons) that transmits through the fixed quantum-basis rotator component 125. Accordingly, the fixed quantum-basis rotator component 125 may include an optical mode conversion component, which may include at least one of an acousto-optic modulator, an optical parametric amplifier, or a quantum transducer, or another type of optical component that is configured to rotate an optical mode of the light (e.g., an energy quantum basis, a wavelength quantum basis, or a frequency quantum basis). The fixed quantum-basis rotator component 125 may be configured to rotate an optical mode of the quantum encoded photon (e.g., from a first optical mode to a second optical mode, along with other examples) when the quantum encoded photon propagates through the fixed quantum-basis rotator component 125. The fixed quantum-basis rotator component 125 then may direct the quantum encoded photon to exit from an output portion of the fixed quantum-basis rotator component 125, as described elsewhere herein.

As indicated above, Fig. 6 is provided as an example. Other examples may differ from what is described with regard to Fig. 6.

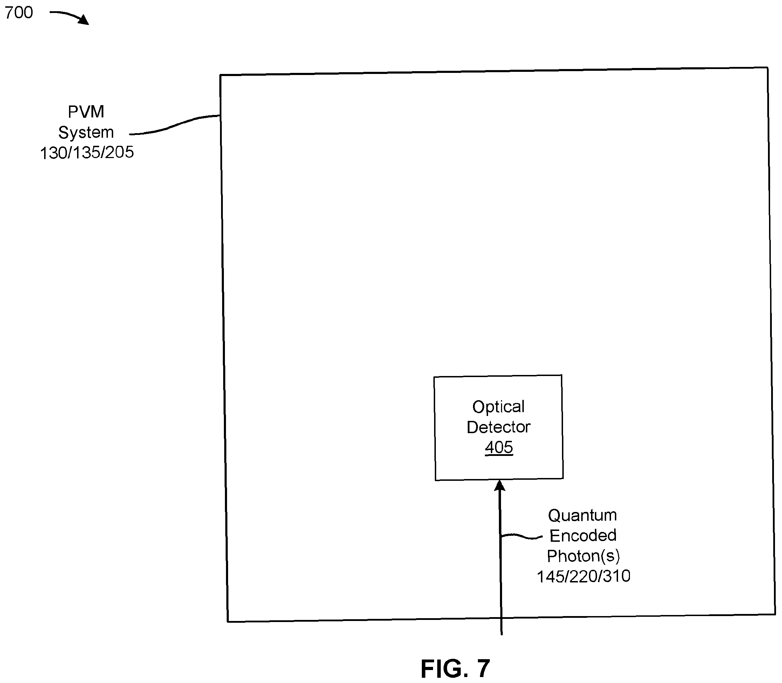

Fig. 7 is a diagram of an example implementation 700 of a PVM system described herein, such as of the first PVM system 130, the second PVM system 135, or the PVM system 205. As shown in Fig. 7, the PVM system includes an optical detector 405 (e.g., a single optical detector 405). Accordingly, the PVM system shown in Fig. 7 may be included in a QPV prover device 105 when a quantum basis of a quantum encoded photon described herein, such as the quantum encoded photon 145, the quantum encoded photon 220, or the quantum encoded photon 310, is a temporal quantum basis or a phase quantum basis.

As further shown in Fig. 7, the optical detector 405 is positioned (e.g., within the PVM system) to receive the quantum encoded photon. For example, the optical detector 405 may be positioned to receive the quantum encoded photon when the quantum encoded photon enters (e.g., at an instant in time that the quantum encoded photon enters, or after the instant in time) the PVM system. As described elsewhere herein, the optical detector 405 is configured to detect light (e.g., comprising one or more photons), and, in some implementations, is configured to detect single photons. For example, the optical detector 405 may be configured to detect the quantum encoded photon when the quantum encoded photon impinges on the optical detector 405.

In some implementations, when a quantum basis of the quantum encoded photon is a temporal quantum basis, the fixed quantum-basis rotator component 125 is configured to rotate a temporal quantum basis of light (e.g., comprising one or more photons) that transmits through the fixed quantum-basis rotator component 125. Accordingly, the fixed quantum-basis rotator component 125 may include a time-bin conversion component, which may include at least one of a Mach-Zehnder interferometer (e.g., with different arm lengths), a temporal mode beam splitter, or a time lens (e.g., with dispersion control), or another type of optical component that is configured to rotate a temporal quantum basis of the light (e.g., from a QW basis to an XY basis, or vice versa). The fixed quantum-basis rotator component 125 may be configured to rotate a temporal quantum basis of the quantum encoded photon (e.g., from a first temporal quantum basis to a second temporal quantum basis, along with other examples) when the quantum encoded photon propagates through the fixed quantum-basis rotator component 125. The fixed quantum-basis rotator component 125 then may direct the quantum encoded photon to exit from an output portion of the fixed quantum-basis rotator component 125, as described elsewhere herein.

In some implementations, when a quantum basis of the quantum encoded photon is a phase quantum basis, the fixed quantum-basis rotator component 125 is configured to rotate a phase quantum basis of light (e.g., comprising one or more photons) that transmits through the fixed quantum-basis rotator component 125. Accordingly, the fixed quantum-basis rotator component 125 may include a phase conversion component, which may include at least one of a Mach-Zehnder interferometer (e.g., with different arm lengths), a phase modulator, a fiber-loop phase shifter, or another type of optical component that is configured to rotate a phase quantum basis of the light. The fixed quantum-basis rotator component 125 may be configured to rotate a phase quantum basis of the quantum encoded photon (e.g., from a first phase quantum basis to a second phase quantum basis, along with other examples) when the quantum encoded photon propagates through the fixed quantum-basis rotator component 125. The fixed quantum-basis rotator component 125 then may direct the quantum encoded photon to exit from an output portion of the fixed quantum-basis rotator component 125, as described elsewhere herein.

As indicated above, Fig. 7 is provided as an example. Other examples may differ from what is described with regard to Fig. 7.

Fig. 8 is a diagram of example components of a device 800 associated with a QPV prover device with an NPBS and at least one PVM system. The device 800 corresponds to one or more of the QPV prover device 105, the first QPV verification device 110, the second QPV verification device 115, and/or the processing component 140. In some implementations, the QPV prover device 105, the first QPV verification device 110, the second QPV verification device 115, and/or the processing component 140 include one or more devices 800 and/or one or more components of the device 800. In the example shown in Fig. 8, the device 800 includes a bus 810, a processor 820, a memory 830, an input component 840, an output component 850, and/or a communication component 860.

The bus 810 includes one or more components that enable wired and/or wireless communication among the components of the device 800. The bus 810 couples together two or more components of Fig. 8, such as via operative coupling, communicative coupling, electronic coupling, and/or electric coupling. For example, the bus 810 may include an electrical connection (e.g., a wire, a trace, and/or a lead) and/or a wireless bus. The processor 820 includes a central processing unit, a graphics processing unit, a microprocessor, a controller, a microcontroller, a digital signal processor, a field-programmable gate array, an application-specific integrated circuit, and/or another type of processing component. The processor 820 may be implemented in hardware, firmware, or a combination of hardware and software. In some implementations, the processor 820 includes one or more processors capable of being programmed to perform one or more operations or processes described elsewhere herein.

The memory 830 includes volatile and/or nonvolatile memory, such as random access memory (RAM), read only memory (ROM), a hard disk drive, and/or another type of memory (e.g., a flash memory, a magnetic memory, and/or an optical memory). The memory 830 may include internal memory (e.g., RAM, ROM, or a hard disk drive) and/or removable memory (e.g., removable via a universal serial bus connection). In some implementations, the memory 830 is a non-transitory computer-readable medium. The memory 830 stores information, one or more instructions, and/or software (e.g., one or more software applications) related to the operation of the device 800. In some implementations, the memory 830 includes one or more memories that are coupled (e.g., communicatively coupled) to one or more processors (e.g., processor 820), such as via the bus 810. Communicative coupling between a processor 820 and a memory 830 enables the processor 820 to read and/or process information stored in the memory 830 and/or to store information in the memory 830.

The input component 840 enables the device 800 to receive input, such as user input and/or sensed input. For example, the input component 840 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 850 enables the device 800 to provide output, such as via a display, a speaker, and/or a light-emitting diode. The communication component 860 enables the device 800 to communicate with other devices via a wired connection and/or a wireless connection. For example, the communication component 860 may include a receiver, a transmitter, a transceiver, a modem, a network interface card, and/or an antenna.

In some implementations, the device 800 performs one or more operations or processes described herein. For example, a non-transitory computer-readable medium (e.g., memory 830) may store a set of instructions (e.g., one or more instructions or code) for execution by the processor 820. The processor 820 may execute the set of instructions to perform one or more operations or processes described herein. In some implementations, execution of the set of instructions, by one or more processors 820, causes the one or more processors 820 and/or the device 800 to perform one or more operations or processes described herein. In some implementations, hardwired circuitry is used instead of or in combination with the instructions to perform one or more operations or processes described herein. Additionally, or alternatively, the processor 820 may be configured to perform one or more operations or processes described herein. Thus, implementations described herein are not limited to any specific combination of hardware circuitry and software.

The number and arrangement of components shown in Fig. 8 are provided as an example. The device 800 may include additional components, fewer components, different components, or differently arranged components than those shown in Fig. 8. Additionally, or alternatively, a set of components (e.g., one or more components) of the device 800 may perform one or more functions described as being performed by another set of components of the device 800.

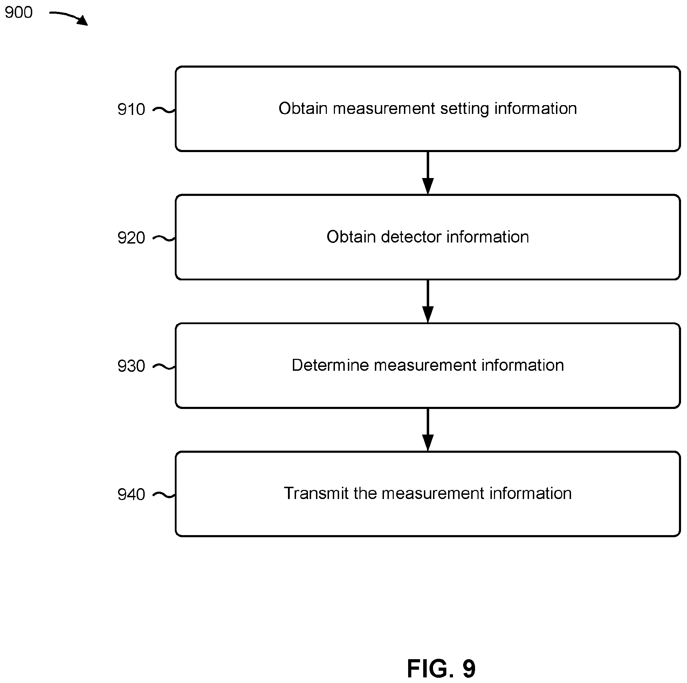

Fig. 9 is a flowchart of an example process 900 associated with a QPV prover device with an NPBS and at least one PVM system. One or more process blocks of Fig. 9 are performed by a processing component (e.g., the processing component 140) of a QPV device (e.g., QPV prover device 105) and/or by another device or a group of devices separate from or including the processing component, such as another component of the QPV prover device. Additionally, or alternatively, one or more process blocks of Fig. 9 may be performed by one or more components of device 800, such as processor 820, memory 830, input component 840, output component 850, and/or communication component 860.

As shown in Fig. 9, process 900 includes obtaining measurement setting information (block 910). For example, the processing component may obtain measurement setting information, as described above.

As further shown in Fig. 9, process 900 includes obtaining detector information (block 920). For example, the processing component obtain detector information, as described above. For example, the processing component may obtain, after obtaining the measurement setting information, detector information from a PVM system of the QPV device and based on the PVM system detecting a quantum encoded photon that is received by an NPBS of the QPV device and propagated to the PVM system via the NPBS or the NPBS and a fixed quantum-basis rotator component of the QPV device, as described above.

As further shown in Fig. 9, process 900 includes determining measurement information (block 930). For example, the processing component may determine measurement information, as described above. The processing component may determine the measurement information based on the measurement setting information and the detector information.

As further shown in Fig. 9, process 900 includes transmitting the measurement information (block 940). For example, the processing component may transmit the measurement information, as described above.

Process 900 may include additional aspects, such as any single aspect or any combination of aspects described below and/or in connection with one or more other processes described elsewhere herein.

In a first aspect, the measurement setting information indicates whether the PVM system received the quantum encoded photon within a time window indicated by the measurement setting information.

In a second aspect, alone or in combination with the first aspect, the measurement setting information identifies whether a particular optical detector of the PVM system is expected to receive the quantum encoded photon.

In a third aspect, alone or in combination with one or more of the first and second aspects, the measurement information identifies whether the PVM system is expected to receive the quantum encoded photon within a first time window or either one of a second time window that follows the first time window or a third time window that follows the second time window.

In a fourth aspect, alone or in combination with one or more of the first through third aspects, the measurement information indicates whether the PVM system received the quantum encoded photon within a time window indicated by the measurement setting information. Although Fig. 9 shows example blocks of process 900, in some implementations, process 900 includes additional blocks, fewer blocks, different blocks, or differently arranged blocks than those depicted in Fig. 9. Additionally, or alternatively, two or more of the blocks of process 900 may be performed in parallel.

The foregoing disclosure provides illustration and description, but is not intended to be exhaustive or to limit the implementations described herein to the precise forms that are described. Modifications and variations can be made in light of the above description or may be acquired from practice of the implementations described herein.

It will be apparent that systems and/or methods described herein can be implemented in different forms of hardware, firmware, or a combination of hardware and software. The actual specialized control hardware or software code used to implement these systems and/or methods is not limiting of the implementations described herein. Thus, the operation and behavior of the systems and/or methods are described herein without reference to specific software code-it being understood that software and hardware can be designed to implement the systems and/or methods based on the description herein.

Even though particular combinations of features are recited in the claims and/or described in the specification, these combinations are not intended to limit the implementations described herein. In fact, many of these features can be combined in ways not specifically recited in the claims and/or described in the specification. For example, the description includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item. When "a component" or "one or more components" (or another element, such as "a processor" or "one or more processors") is described or claimed (within a single claim or across multiple claims) as performing multiple operations or being configured to perform multiple operations, this language is intended to broadly cover a variety of architectures and environments. For example, unless explicitly claimed otherwise (e.g., via the use of "first component" and "second component" or other language that differentiates components in the claims), this language is intended to cover a single component performing or being configured to perform all of the operations, a group of components collectively performing or being configured to perform all of the operations, a first component performing or being configured to perform a first operation and a second component performing or being configured to perform a second operation, or any combination of components performing or being configured to perform the operations. For example, when a claim has the form "one or more components configured to: perform X; perform Y; and perform Z," that claim should be interpreted to mean "one or more components configured to perform X; one or more (possibly different) components configured to perform Y; and one or more (also possibly different) components configured to perform Z."

No element, act, or instruction used herein should be construed as critical or essential unless explicitly described as such. Also, as used herein, the articles "a" and "an" are intended to include one or more items, and can be used interchangeably with "one or more." Further, as used herein, the article "the" is intended to include one or more items referenced in connection with the article "the" and can be used interchangeably with "the one or more." Furthermore, as used herein, the term "set" is intended to include one or more items (e.g., related items, unrelated items, or a combination of related and unrelated items,), and can be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and can be used interchangeably with "and/or," unless explicitly stated otherwise (e.g., if used in combination with "either" or "only one of").

Further examples and combinations thereof include the followings.

Clause 1. A quantum position verification, QPV, prover device (105), comprising:
a non-polarizing beam splitter, NPBS, (120) positioned to receive a quantum encoded photon (145) from a first QPV verification device (110);
a first projection-valued measurement, PVM, system (130) positioned to detect the quantum encoded photon (145) when the quantum encoded photon (145) exits from a first output portion of the NPBS (120);
a fixed quantum-basis rotator component (125) positioned to receive the quantum encoded photon (145) when the quantum encoded photon (145) exits from a second output portion of the NPBS (120); and
a second PVM system (135) positioned to detect the quantum encoded photon (145) when the quantum encoded photon (145) exits from an output portion of the fixed quantum-basis rotator component (125).

Clause 2. The QPV prover device (105) of Clause 1, wherein each PVM system (130,135) of the first PVM system (130) and the second PVM system (135) includes:
a spatial mode discriminator component (410) positioned to receive the quantum encoded photon (145) when the quantum encoded photon (145) enters the PVM system (130,135);
a first optical detector (405-1) positioned to receive the quantum encoded photon (145) when the quantum encoded photon (145) exits from a first output portion of the spatial mode discriminator component (410); and
a second optical detector (405-2) positioned to receive the quantum encoded photon (145) when the quantum encoded photon (145) exits from a second output portion of the spatial mode discriminator component (410).

Clause 3. The QPV prover device (105) of Clause 2, wherein the fixed quantum-basis rotator component (125) includes a spatial mode conversion component.

Clause 4. The QPV prover device (105) of Clause 1, wherein each PVM system (130,135) of the first PVM system (130) and the second PVM system (135) includes:
an orbital angular momentum, OAM, mode discriminator component (505) positioned to receive the quantum encoded photon (145) when the quantum encoded photon (145) enters the PVM system (130, 135);
a first optical detector (405-1) positioned to receive the quantum encoded photon (145) when the quantum encoded photon (145) exits from a first output portion of the OAM mode discriminator component (505); and
a second optical detector (405-2) positioned to receive the quantum encoded photon (145) when the quantum encoded photon (145) exits from a second output portion of the OAM mode discriminator component (505).

Clause 5. The QPV prover device (105) of Clause 4, wherein the fixed quantum-basis rotator component (125) includes an OAM mode conversion component (505).

Clause 6. The QPV prover device (105) of Clause 1, wherein each PVM system (130, 135) of the first PVM system (130) and the second PVM system (135) includes:
an optical detector (405) positioned to receive the quantum encoded photon (145) when the quantum encoded photon (145) enters the PVM system (130, 135).

Clause 7. The QPV prover device (105) of Clause 6, wherein the fixed quantum-basis rotator component (125) includes a time-bin conversion component.

Clause 8. The QPV prover device (105) of Clause 6, wherein the fixed quantum-basis rotator component (125) includes a phase conversion component.

Clause 9. The QPV prover device (105) of Clause 1, wherein each PVM system (130,135) of the first PVM system (130) and the second PVM system (135) includes:
a dispersive component (605) positioned to receive the quantum encoded photon (145) when the quantum encoded photon (145) enters the PVM system (130,135);
a first optical detector (405-1) positioned to receive the quantum encoded photon (145) when the quantum encoded photon (145) exits from a first output portion of the dispersive component (605); and
a second optical detector (405-2) positioned to receive the quantum encoded photon (145) when the quantum encoded photon (145) exits from a second output portion of the dispersive component (605).

Clause 10. The QPV prover device (105) of Clause 9, wherein the fixed quantum-basis rotator component (125) includes an optical mode conversion component.

Clause 11. The QPV prover device (105) of Clause 1, further comprising a processing component (140) configured to:
obtain measurement setting information (150) from a second QPV verification device (115);
obtain, after obtaining the measurement setting information (150), detector information (155) from the first PVM system (130) or the second PVM system (135) based on a particular PVM system, of the first PVM system (130) and the second PVM system (135), receiving the quantum encoded photon (145);
determine, based on the measurement setting information (150) and the detector information (155), measurement information (160); and
transmit the measurement information (160) to the first QPV verification device (110).

Clause 12. A device (105), comprising:
a non-polarizing beam splitter, NPBS, (120) positioned to receive a quantum encoded photon (220; 310);
a fixed quantum-basis rotator component (125) positioned to receive the quantum encoded photon (220; 310) from a first output portion of the NPBS (120); and
a projection-valued measurement, PVM, system (130; 205) positioned to detect the quantum encoded photon (220; 310) when the quantum encoded photon (220; 310) propagates from one of a second output portion of the NPBS (120) or an output portion of the fixed quantum-basis rotator component (125).

Clause 13. The device (105) of Clause 12, further comprising a set of reflectors (210-1, 210-2) or a waveguide (215), wherein:
the set of reflectors (210-1, 210-2) or the waveguide (215) are positioned to receive the quantum encoded photon (220; 310) from the fixed quantum-basis rotator component (125); and
the PVM system (130; 205) is further positioned to receive the quantum encoded photon (220; 310) from the set of reflectors (210-1, 210-2) or the waveguide (215).

Clause 14. The device (105) of Clause 12, further comprising a first polarizing beam splitter, PBS, (305-1), a second PBS (305-2), and a set of reflectors (210-1, 210-2) or a waveguide (215), wherein:
the first PBS (305-1) is positioned to receive the quantum encoded photon (220; 310) from the fixed quantum-basis rotator (125) component;
the set of reflectors (210-1, 210-2) or the waveguide (215) are positioned to receive the quantum encoded photon (220; 310) from a first output portion of the first PBS (305-1);
the second PBS (305-2) is positioned to receive the quantum encoded photon (145; 220; 310) from the set of reflectors (210-1, 210-2) or the waveguide (215); and
the PVM system (205) is further positioned to receive the quantum encoded photon (220; 310) from the second PBS (305-2).

Clause 15. The device (105) of Clause 12, wherein the fixed quantum-basis rotator component (125) includes at least one of:
a spatial mode conversion component;
an OAM mode conversion component;
a time-bin conversion component;
a phase conversion component; or
an optical mode conversion component.

Clause 16. The device (105) of Clause 12, further comprising a processing component (140) configured to:
obtain measurement setting information (225; 315);
obtain, after obtaining the measurement setting information (225; 315), detector information (230; 320) from the PVM system (130; 205) based on the PVM system (130; 205) detecting the quantum encoded photon (220; 310);
determine, based on the measurement setting information (225; 315) and the detector information (230; 320), measurement information (235; 325); and
transmit the measurement information (235; 325).

Clause 17. The device (105) of Clause 16, wherein:
the measurement setting information (225; 315) identifies whether a particular optical detector (405-1, 405-2) of the PVM system (130; 205) is expected to receive the quantum encoded photon (220; 310).

Clause 18. The device (105) of Clause 16, wherein:
the measurement setting information (225; 315) identifies whether the PVM system (130; 205) is expected to receive the quantum encoded photon (220; 310) within a first time window or either one of a second time window that follows the first time window or a third time window that follows the second time window.

Clause 19. A method (900), comprising:
obtaining (910), by a processing component (140) of a quantum position verification, QPV, device (105), measurement setting information (150; 225; 315);
obtaining (920), after obtaining the measurement setting information (150; 225; 315), detector information (155; 230; 320) from a projection-valued measurement, (PVM, system (130; 205) and based on the PVM system (130; 205) detecting a quantum encoded photon (145; 220; 310) that is received by a non-polarizing beam splitter, NPBS, (120) of the QPV device (105) and propagated to the PVM system (130; 205) via the NPBS (120) or the NPBS (120) and a fixed quantum-basis rotator component (125) of the QPV device (105);
determining (930), based on the measurement setting information (150; 225; 315) and the detector information (155; 230; 320), measurement information (160; 235; 325); and transmitting (940) the measurement information (160; 235; 325).

Clause 20. The method (900) of Clause 19, wherein:
the measurement information (160; 235; 325) indicates whether the PVM system (130; 205) received the quantum encoded photon (145; 220; 310) within a time window indicated by the measurement setting information (150; 225; 315).

Clause 21. The method (900) of Clause 19 or 20 wherein the measurement setting information (150; 225; 315) identifies whether a particular optical detector (405-1, 405-2) of the PVM system (130; 205) is expected to receive the quantum encoded photon (145; 220; 310).

## Claims

1. A quantum position verification, QPV, prover device (105), comprising:
a non-polarizing beam splitter, NPBS, (120) positioned to receive a quantum encoded photon (145) from a first QPV verification device (110);
a first projection-valued measurement, PVM, system (130) positioned to detect the quantum encoded photon (145) when the quantum encoded photon (145) exits from a first output portion of the NPBS (120);
a fixed quantum-basis rotator component (125) positioned to receive the quantum encoded photon (145) when the quantum encoded photon (145) exits from a second output portion of the NPBS (120); and
a second PVM system (135) positioned to detect the quantum encoded photon (145) when the quantum encoded photon (145) exits from an output portion of the fixed quantum-basis rotator component (125).

2. The QPV prover device (105) of claim 1, wherein each PVM system (130,135) of the first PVM system (130) and the second PVM system (135) includes:
a spatial mode discriminator component (410) positioned to receive the quantum encoded photon (145) when the quantum encoded photon (145) enters the PVM system (130,135);
a first optical detector (405-1) positioned to receive the quantum encoded photon (145) when the quantum encoded photon (145) exits from a first output portion of the spatial mode discriminator component (410); and
a second optical detector (405-2) positioned to receive the quantum encoded photon (145) when the quantum encoded photon (145) exits from a second output portion of the spatial mode discriminator component (410).

3. The QPV prover device (105) of claim 2, wherein the fixed quantum-basis rotator component (125) includes a spatial mode conversion component.

4. The QPV prover device (105) of claim 1, wherein each PVM system (130,135) of the first PVM system (130) and the second PVM system (135) includes:
an orbital angular momentum, OAM, mode discriminator component (505) positioned to receive the quantum encoded photon (145) when the quantum encoded photon (145;) enters the PVM system (130, 135);
a first optical detector (405-1) positioned to receive the quantum encoded photon (145) when the quantum encoded photon (145) exits from a first output portion of the OAM mode discriminator component (505); and
a second optical detector (405-2) positioned to receive the quantum encoded photon (145) when the quantum encoded photon (145) exits from a second output portion of the OAM mode discriminator component (505).

5. The QPV prover device (105) of claim 4, wherein the fixed quantum-basis rotator component (125) includes an OAM mode conversion component (505).

6. The QPV prover device (105) of claim 1, wherein each PVM system (130, 135) of the first PVM system (130) and the second PVM system (135) includes:
an optical detector (405) positioned to receive the quantum encoded photon (145) when the quantum encoded photon (145) enters the PVM system (130, 135).

7. The QPV prover device (105) of claim 6, wherein the fixed quantum-basis rotator component (125) includes a time-bin conversion component.

8. The QPV prover device (105) of claim 6, wherein the fixed quantum-basis rotator component (125) includes a phase conversion component.

9. The QPV prover device (105) of claim 1, wherein each PVM system (130,135) of the first PVM system (130) and the second PVM system (135) includes:
a dispersive component (605) positioned to receive the quantum encoded photon (145) when the quantum encoded photon (145) enters the PVM system (130,135);
a first optical detector (405-1) positioned to receive the quantum encoded photon (145) when the quantum encoded photon (145) exits from a first output portion of the dispersive component (605); and
a second optical detector (405-2) positioned to receive the quantum encoded photon (145) when the quantum encoded photon (145) exits from a second output portion of the dispersive component (605).

10. The QPV prover device (105) of claim 9, wherein the fixed quantum-basis rotator component (125) includes an optical mode conversion component.

11. The QPV prover device (105) of claim 1, further comprising a processing component (140) configured to:
obtain measurement setting information (150) from a second QPV verification device (115);
obtain, after obtaining the measurement setting information (150), detector information (155) from the first PVM system (130) or the second PVM system (135) based on a particular PVM system, of the first PVM system (130) and the second PVM system (135), receiving the quantum encoded photon (145);
determine, based on the measurement setting information (150) and the detector information (155), measurement information (160); and
transmit the measurement information (160) to the first QPV verification device (110).

12. The QPV prover device (105) of claim 1 wherein the quantum-basis rotator component (125) includes at least one of:
a spatial mode conversion component;
an OAM mode conversion component;
a time-bin conversion component;
a phase conversion component; or
an optical mode conversion component.

13. A method (900), comprising:
obtaining (910), by a processing component (140) of a quantum position verification, QPV, device (105), measurement setting information (150; 225; 315);
obtaining (920), after obtaining the measurement setting information (150; 225; 315), detector information (155; 230; 320) from a projection-valued measurement, (PVM, system (130; 205) and based on the PVM system (130; 205) detecting a quantum encoded photon (145; 220; 310) that is received by a non-polarizing beam splitter, NPBS, (120) of the QPV device (105) and propagated to the PVM system (130; 205) via the NPBS (120) or the NPBS (120) and a fixed quantum-basis rotator component (125) of the QPV device (105);
determining (930), based on the measurement setting information (150; 225; 315) and the detector information (155; 230; 320), measurement information (160; 235; 325); and
transmitting (940) the measurement information (160; 235; 325).

14. The method (900) of claim 13, wherein:
the measurement information (160; 235; 325) indicates whether the PVM system (130; 205) received the quantum encoded photon (145; 220; 310) within a time window indicated by the measurement setting information (150; 225; 315).

15. The method (900) of claim 13 or 14 wherein the measurement setting information (150; 225; 315) identifies whether a particular optical detector (405-1, 405-2) of the PVM system (130; 205) is expected to receive the quantum encoded photon (145; 220; 310).
